(19) Europäisches Patentamt

European Patent Office

Office européen des brevets

(11) **EP 1 150 255 A2**

(12) **EUROPEAN PATENT APPLICATION**

(43) Date of publication:
31.10.2001 Bulletin 2001/44

(51) Int Cl.⁷: **G06T 17/20**

(21) Application number: 01110601.0

(22) Date of filing: 30.04.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.04.2000 JP 2000129826**

(71) Applicant: **NEC CORPORATION**
**Tokyo (JP)**

(72) Inventor: **Syo, Toshiyuki**
**Tokyo (JP)**

(74) Representative:
**von Samson-Himmelstjerna, Friedrich R.,**
**Dipl.-Phys. et al**
**SAMSON & PARTNER**
**Widenmayerstrasse 5**
**80538 München (DE)**

(54) **Method of generating mesh and storage medium storing mesh generating program**

(57)    A method for generating well-posed meshes with high speed and accuracy is provided. An initial value of a judgement condition value and number of times of designated trials are set. Mesh points (M) to be moved are selected by random numbers and the selected mesh points (M) are placed in a manner that its destination place is determined by random numbers or mesh points (M) are moved in a direction in which an evaluation function calculated in a region near each mesh point is locally minimized. An amount of change in evaluation functions is calculated. If the amount of change is negative, the movement is permitted and, if not negative, is permitted in a permission probability. Judgement condition values and random number mesh selecting probability are decreased and re-placement is repeated when the rate of decrease of the evaluation function becomes not more than a specified value.

**FIG.1**

**Description**

BACKGROUND OF THE INVENTION

Field of the Invention

The present invention relates to a method for generating meshes that can be suitably used in a semiconductor process simulation for use in development of semiconductor devices and a storage medium storing the method for generating meshes.

The present application claims priority of Japanese Patent Application No.2000-129826 filed on April 28,2000, which is hereby incorporated by reference.

Description of the Related Art

In recent years, developments are being made in computer simulation technology enabling universal handling of analyses of semiconductor device manufacturing processes and semiconductor device characteristics. Computer process simulation includes simulations of processes of oxidation, CVD (Chemical Vapor Deposition), lithography, etching, ion implantation, diffusion and a like. For example, in the diffusion process, data on impurity concentration can be obtained by solving a diffusion equation. Moreover, in device simulation, information about various physical quantities within a semiconductor device can be obtained by solving a partial differential equation, including a Poisson's equation, that can represent a relation between a potential and a carrier density, a current continuity equation or a like. To solve the above diffusion equation and Poisson's equation, a calculation method is used in which the semiconductor device is divided into rectangular portions or triangular elements (meshes) and then the partial differential equation is applied to the divided portions in a discrete manner. Generally, accuracy of the calculation in the semiconductor simulation depends on a state of the division of the mesh, and the more the number of meshes increase, the higher the accuracy of the calculation becomes. On the other hand, since calculation time increases super-linearly with increase of the number of the mesh, a mesh-generating method for generating a "well-posed mesh" which can achieve higher calculation accuracy using the number of meshes being as small as possible is conventionally studied. In the conventional method for generating the mesh, after coarse meshes are initially generated in advance, mesh points are added sequentially to portions where additional mesh points are needed to fragment mesh elements. For example, a method in which the mesh point is added to a mesh branch establishing a link between mesh points each having a big difference in a local impurity concentration, in a rate of change of the impurity concentration and in solutions to the partial differential equation in order to fragment the triangular element.

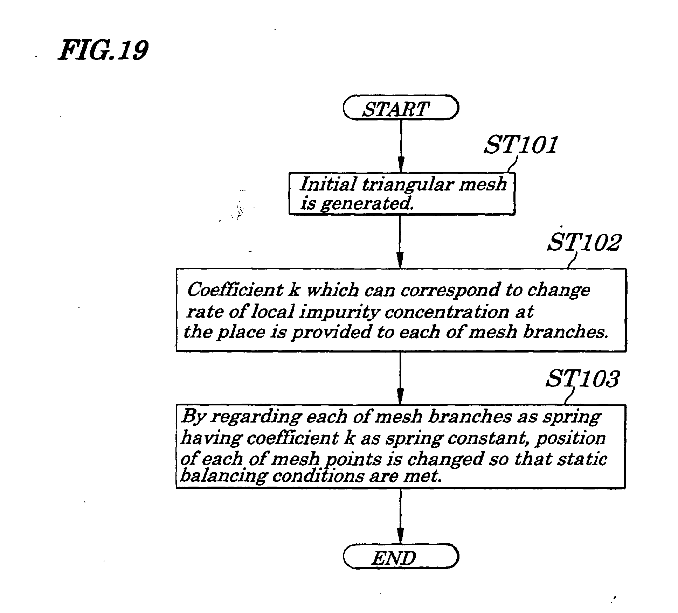

Another method is disclosed in Japanese Patent Application No. Hei 7-169936, in which the mesh is generated while the number of the mesh points still remains at a constant level in order to prevent the number of mesh points from being increased, which had been a problem in the methods described above. In this method, a triangular mesh is first generated in a state where meshes are initially placed (see Step ST101 in Fig. 19). Then, a coefficient k which can correspond to the difference in the impurity concentration between pairs of mesh points linked by the mesh branch is provided to the mesh branch establishing a link between tops of the triangular meshes (see Step ST102). Finally, by regarding each of the mesh branches as a spring having the coefficient k as a spring constant, a position of each of the mesh points is changed so that static balancing conditions are met (see Step ST103).

However, in the above mesh generating method, since, after the triangle mesh is generated once, coordinates of the top of the triangular mesh are moved and, as a result, the triangular mesh is generated before a position of the mesh point is optimized, a problem of an increase in an amount of the calculation occurs. Moreover, since, if the mesh point is moved, an entire structure of the mesh is changed and the triangular mesh generated in advance cannot be used, it is necessary to reconstruct the triangular mesh even after being re-placed, thus again producing a problem of the increase in the amount of the calculation. Because of this, there is another problem in that application of the above method to the process simulation causes time to be spent wastefully in calculation.

Moreover, the above method has another problem in that, if there is a plurality of regions having a large difference in the impurity concentrations, in particular, some configurations of the initial triangular mesh may prevent the mesh point to be optimally placed. Still another problem is that, if the mesh point is to be deleted while the mesh point is being re-placed, it is necessary to re-set the spring constant every time the mesh point has to be deleted and to re-calculate the position of the mesh point that can meet the static balancing condition, causing the amount of the calculation to be again increased. Because of this, it is practically difficult to delete the mesh point while the mesh point is being re-placed and to generate the mesh with high accuracy using necessary and sufficient number of meshes.

Also, in the above method, if it is desired that an arbitrary mesh point is made unmovable, an additional process to designate the mesh point as a fixed point is required. In this case, the fixed mesh point becomes a singular point in the simulation and, when the position of the mesh point that can meet the static balancing conditions is calculated, a problem of a lowered convergence occurs because of the singular point. When arbitrary conditions are introduced and if each of conditional expressions containing the introduced conditions induces a different or reverse behavior of the mesh point, the convergence is made difficult. Therefore, it is difficult to apply the above method to the process simulation of semiconductor devices.

If the above method has to be applied to a three- dimensional simulation, a limitation of a moving range of the mesh point is required in order to avoid a breakdown in a Dorney triangular division, thus making it difficult to place necessary and sufficient mesh points. If the Dorney triangular division is broken down, re-generation of the mesh is necessary, causing tremendously increased calculation time to be required. If the break-down of the Dorney triangular division is neglected, accuracy is lowered, making it difficult to place necessary and sufficient mesh points.

Thus, it is not realistic to apply the above method to the three-dimensional simulation.

SUMMARY OF THE INVENTION

In view of the above, it is an object of the present invention to provide a method for generating meshes that can be suitably used, in particular, in a semiconductor process simulation for use in development of semiconductor devices and that enables meshes to be optimally generated with high speed and high accuracy and to be applied to a three-dimensional simulation, and a storage medium storing the method for generating meshes.

According to a first aspect of the present invention, there is provided a mesh generating method for use in a semiconductor process simulation or a semiconductor device simulation and for achieving an optimum placement of a mesh, including:

a mesh point initial placement step of placing initially mesh points;
an evaluation function calculating step of calculating a value, corresponding to a placement pattern, of a specified evaluation function taking on a specified value corresponding to a placement pattern of the mesh points and being used as an index for implementing an optimum placement of the mesh points;
a random number generating step of generating a random number;
a re-placement evaluation function calculating step of calculating a value of the evaluation function to be obtained when each of specified mesh points is moved to a position corresponding to the random number generated in the random number generating step;
a well-posed placement possibility judging step of judging a well-posed placement possibility in movement of the specified mesh points based on values of the evaluation function calculated in the evaluation function calculating step and on values of the evaluation function calculated in the re-placement evaluation function calculating step; and
a mesh point re-placement step of performing re-placement of the mesh points by moving the specified mesh points when the well-posed placement possibility is judged to exist in the well-posed placement possibility judging step.

According to a second aspect of the present invention, there is provided a mesh generating method for use in a semiconductor process simulation or a semiconductor device simulation and for achieving an optimum placement of a mesh, including:

a mesh point initial placement step of placing initially mesh points;
an evaluation function calculating step of calculating a value, corresponding to a placement pattern, of a specified evaluation function taking on a specified value corresponding to a placement pattern of the mesh points and being used as an index for implementing an optimum placement of the mesh points;
a re-placement evaluation function calculating step of calculating a value of the evaluation function obtained when each of specified mesh points is moved to a specified position in direction in which the evaluation function becomes an extreme value corresponding to re-placement which brings the mesh points nearly to a state in which an optimum placement is achieved;
a well-posed placement possibility judging step of judging a well-posed placement possibility in movement in the specified mesh points based on values of the evaluation function calculated in the evaluation function calculating step and on values of the evaluation function calculated in the re-placement evaluation function calculating step; and
a mesh point re-placement step of performing re-placement of the mesh points by moving the specified mesh points when the well-posed placement possibility is judged to exist in the well-posed placement possibility judging step.

According to a third aspect of the present invention, there is provided a mesh generating method for use in a semiconductor process simulation or a semiconductor device simulation and for achieving an optimum placement of a mesh, including:

a mesh point initial placement step of placing initially mesh points;
an evaluation function calculating step of calculating a value, corresponding to a placement pattern, of a specified evaluation function taking on a specified value corresponding to a placement pattern of the mesh points and being used as an index for implementing an optimum placement of the mesh points;
a re-placement evaluation function calculating step of calculating a value of the evaluation function to be obtained when each of specified mesh points is deleted; and
a well-posed placement possibility judging step of judging a well-posed placement possibility in deletion of the specified mesh points based on values of the evaluation function calculated in the evaluation function calculating step and on values of the evaluation function calculated in the re-placement evaluation function calculating step; and
a mesh point re-placement step of performing re-placement of the mesh points by deleting the specified mesh points when the well-posed placement possibility is judged to exist in the well-posed placement possibility judging step.

According to a fourth aspect of the present invention, there is provided a mesh generating method for use in a semiconductor process simulation or a semiconductor device simulation and for achieving an optimum placement of a mesh, including:

a mesh point initial placement step of placing initially mesh points;
an evaluation function calculating step of calculating a value, corresponding to a placement pattern, of first and second evaluation functions taking on a specified value corresponding to a placement pattern of the mesh points and being used as an index for implementing an optimum placement of the mesh points;
a first random generating step to generate a first random number;
a second random generating step to generate a second random number;
a first re-placement evaluation function calculating step of calculating a value of the first evaluation function obtained when each of specified mesh points is moved in a first probability based on the first random number to a position corresponding to the second random number generated in the second random number generating step;
a second re-placement evaluation function calculating step of calculating a value of the second evaluation function obtained when each of the specified mesh points is moved in a second probability based on the first random number to a specified position in a direction in which the second evaluation function becomes an extreme value corresponding to re-placement which brings the mesh points nearly to a state in which an optimum placement is achieved;
a well-posed placement possibility judging step of judging a well-posed placement possibility in movement of the specified mesh points based on a value of the first or second evaluation function calculated in the evaluation function calculating step and on a value of the first or second evaluation function calculated in the first or second re-placement evaluation function calculating step; and
a mesh point re-placement step of performing re-placement of the mesh points by moving the specified mesh points when the well-posed placement possibility is judged to exist in the well-posed placement possibility judging step.

In the foregoing, a preferable mode is one wherein the first or second evaluation function is set in advance so that the value of the first or second evaluation function decreases as a placement pattern of the mesh points turns out to be a state of an optimum placement and wherein, in the well-posed placement possibility judging step, the first or second evaluation function calculated in the re-placement evaluation calculating step becomes larger than the first or second evaluation function calculated in the evaluation function calculating step, movement of the specified mesh points in a specified permission probability is judged to be possible and wherein the permission probability is set so that the permission probability decreases with increase in the number of times of re-placement of the mesh points.
Also, a preferable mode is one wherein the first probability is so set that it decreases with increase in the number of times of re-placement of the mesh points.
Also, a preferable mode is one wherein the mesh generating method is employed for use in a simulation of manufacturing processes for semiconductors.
Also, a preferable mode is one wherein in the second re-placement evaluation function calculating step, a direction in which the first evaluation function or the second evaluation function becomes an extreme value corresponding to re-placement which brings the mesh points nearly to a state in which an optimum placement is achieved, is used as a direction in which same mesh point is moved next time in the second re-placement evaluation function calculating step.

Also, a preferable mode is one wherein in the first and second re-placement evaluation function calculating step, values of the first and second evaluation functions are calculated in a vicinity of the specified mesh points.

According to a fifth aspect of the present invention, there is provided a mesh generating method for use in a semiconductor process simulation or a semiconductor device simulation and for achieving an optimum placement of a mesh, including:

a mesh point initial placement step of placing initially mesh points;

an evaluation function calculating step of calculating, values, corresponding to placement patterns, of the first, the second and a third evaluation function each taking on a specified value corresponding to each of placement patterns of the mesh points and each being used as an index for implementing an optimum placement of the mesh points;

a first random generating step to generate a first random number;

a second random generating step to generate a second random number;

a first re-placement evaluation function calculating step of calculating a value of the first evaluation function obtained when each of first specified mesh points is moved in a first probability based on the first random number to a position corresponding to a second random number generated in the second random number generating step;

a second re-placement evaluation function calculating step of calculating a value of the second evaluation function obtained when each of second specified mesh points is moved in a second probability based on the first random number to a specified position in a direction in which the second evaluation function becomes an extreme value corresponding to re-placement which brings the mesh points nearly to a state in which an optimum placement is achieved;

a third re-placement evaluation function calculating step of calculating a value of the third evaluation function to be obtained when each of third specified mesh points is deleted in a third probability based on the first random number;

a well-posed placement possibility judging step of judging the well-posed placement possibility in movement of the first or second specified mesh points based on a value of the first or second evaluation function calculated in the evaluation function calculating step and based on a value of the first or second evaluation function calculated in the first or second re-placement evaluation function calculating step, when the first or second re-placement evaluation function calculating step is performed and of judging the well-posed placement possibility in deletion of the third specified mesh points based on a value of the third evaluation function calculated in the evaluation function calculating step and based on a value of the third evaluation function calculated in the third re-placement evaluation function calculating step, when the third re-placement evaluation function calculating step is performed; and

a mesh point re-placement step of performing re-placement of the mesh points by moving or deleting the first, second or third specified mesh points when the well-posed placement possibility is judged to exist in the well-posed placement possibility judging step.

According to a sixth aspect of the present invention, there is provided a storage medium storing a mesh generating program to have a computer execute a mesh generating method for use in a semiconductor process simulation or a semiconductor device simulation and for achieving an optimum placement of a mesh, the mesh generating method including:

a mesh point initial placement step of placing initially mesh points;

an evaluation function calculating step of calculating a value, corresponding to a placement pattern, of a specified evaluation function taking on a specified value corresponding to a placement pattern of the mesh points and being used as an index for implementing an optimum placement of the mesh points;

a random number generating step of generating random numbers;

a re-placement evaluation function calculating step of calculating a value of the evaluation function to be obtained when each of specified mesh points is moved to a position corresponding to the random numbers generated in the random number generating step;

a well-posed placement possibility judging step of judging a well-posed placement possibility in movement of the specified mesh points based on a value of the evaluation function calculated in the evaluation function calculating step and on a value of the evaluation function calculated in the re-placement evaluation function calculating step; and

a mesh point re-placement step of performing re-placement of the mesh points by moving the specified mesh points when the well-posed placement possibility is judged to exist in the well-posed placement possibility judging step.

According to a seventh aspect of the present invention, there is provided a storage medium storing a mesh generating program to have a computer execute a mesh generating method for use in a semiconductor process simulation or a semiconductor device simulation and for achieving an optimum placement of a mesh, the mesh generating method including:

a mesh point initial placement step of placing initially mesh points;
an evaluation function calculating step of calculating a value, corresponding to a placement pattern, of a specified evaluation function taking on a specified value corresponding to a placement pattern of the mesh points and being used as an index for implementing an optimum placement of the mesh points;
a re-placement evaluation function calculating step of calculating a value of the evaluation function obtained when each of specified mesh points is moved to a specified position in a direction in which the evaluation function becomes an extreme value corresponding to re-placement which brings the mesh points nearly to a state in which an optimum placement is achieved;
a well-posed placement possibility judging step of judging a well-posed placement possibility in movement in the specified mesh points based on a value of the evaluation function calculated in the evaluation function calculating step and on a value of the evaluation function calculated in the re-placement evaluation function calculating step; and
a mesh point re-placement step of performing re-placement of the mesh points by moving the specified mesh points when the well-posed placement possibility is judged to exist in the well-posed placement possibility judging step.

According to an eighth aspect of the present invention, there is provided a storage medium storing a mesh generating program to have a computer execute a mesh generating method for use in a semiconductor process simulation or a semiconductor device simulation and for achieving an optimum placement of a mesh, the mesh generating method including:

a mesh point initial placement step of placing initially mesh points;
an evaluation function calculating step of calculating a value, corresponding to a placement pattern, of a specified evaluation function taking on a specified value corresponding to a placement pattern of the mesh points and being used as an index for implementing an optimum placement of the mesh points;
a re-placement evaluation function calculating step of calculating a value of the evaluation function obtained by deleting specified mesh points; and
a well-posed placement possibility judging step of judging a well-posed placement possibility in deletion of the specified mesh points based on a value of the evaluation function calculated in the evaluation function calculating step and on a value of the evaluation function calculated in the re-placement evaluation function calculating step; and
a mesh point re-placement step of performing re-placement of the mesh points by moving the specified mesh points when the well-posed placement possibility is judged to exist in the well-posed placement possibility judging step.

According to a ninth aspect of the present invention, there is provided a storage medium storing a mesh generating program to have a computer execute a mesh generating method for use in a semiconductor process simulation or a semiconductor device simulation and for achieving an optimum placement of a mesh, the mesh generating method including:

a mesh point initial placement step of placing initially mesh points;
an evaluation function calculating step of calculating a value, corresponding to a placement pattern, of first and second evaluation functions taking on a specified value corresponding to a placement pattern of the mesh points and being used as an index for implementing an optimum placement of the mesh points;
a first random generating step to generate a first random number;
a second random generating step to generate a second random number;
a first re-placement evaluation function calculating step of calculating a value of the first evaluation function obtained when each of specified mesh points is moved in a first probability based on the first random number to a position corresponding to the second random number generated in the second random number generating step;
a second re-placement evaluation function calculating step of calculating a value of the second evaluation function obtained when each of the specified mesh points is moved in a second probability based on the first random number to a specified position in a direction in which the second evaluation function becomes an extreme value corresponding to re-placement which brings the mesh points nearly to a state in which an optimum placement is achieved;

a well-posed placement possibility judging step of judging a well-posed placement possibility in movement of the specified mesh points based on a value of the first or second evaluation function calculated in the evaluation function calculating step and on a value of the first or second evaluation function calculated in the first or second re-placement evaluation function calculating step; and

a mesh point re-placement step of performing re-placement of the mesh points by moving the specified mesh points when the well-posed placement possibility is judged to exist in the well-posed placement possibility judging step.

According to a tenth aspect of the present invention, there is provided a storage medium storing a mesh generating program to have a computer execute a mesh generating method for use in a semiconductor process simulation or a semiconductor device simulation and for achieving an optimum placement of a mesh, the mesh generating method including:

a mesh point initial placement step of placing initially mesh points;

an evaluation function calculating step of calculating, values, corresponding to placement patterns, of the first, the second and a third evaluation function each taking on a specified value corresponding to each of placement patterns of the mesh points and each being used as an index for implementing an optimum placement of the mesh points;

a first random generating step to generate a first random number;

a second random generating step to generate a second random number;

a first re-placement evaluation function calculating step of calculating a value of the first evaluation function obtained when each of first specified mesh points is moved in a first probability based on the first random number to a position corresponding to a second random number generated in the second random number generating step;

a second re-placement evaluation function calculating step of calculating a value of the second evaluation function obtained when each of second specified mesh points is moved in a second probability based on the first random number to a specified position in a direction in which the second evaluation function becomes an extreme value corresponding to re-placement which brings the mesh points nearly to a state in which an optimum placement is achieved;

a third re-placement evaluation function calculating step of calculating a value of the third evaluation function to be obtained when each of third specified mesh points is deleted in a third probability based on the first random number;

a well-posed placement possibility judging step of judging the well-posed placement possibility in movement of the first or second specified mesh points based on a value of the first or second evaluation function calculated in the evaluation function calculating step and based on a value of the first or second evaluation function calculated in the first or second re-placement evaluation function calculating step, when the first or second re-placement evaluation function calculating step is performed and of judging the well-posed placement possibility in deletion of the third specified mesh points based on a value of the third evaluation function calculated in the evaluation function calculating step and based on a value of the third evaluation function calculated in the third re-placement evaluation function calculating step, when the third re-placement evaluation function calculating step is performed; and

a mesh point re-placement step of performing re-placement of the mesh points by moving or deleting the first, second or third specified mesh points when the well-posed placement possibility is judged to exist in the well-posed placement possibility judging step.

With the above configurations, after the placement of the mesh points is optimized, the mesh is generated, thus enabling the mesh to be generated with high speed and high accuracy.

With another configuration as above, in the step of judging well-posed states of mesh points, the judgement standard using the evaluation function is adjusted and changed, thus enabling free adjustment of calculation time or highly accurate placement of the mesh points.

With another configuration as above, the number of times of repetition of the mesh point re-placement can be adjusted, thus enabling free adjustment of calculation time or accuracy for placing the mesh points.

With another configuration as above, the mesh points are moved for re-placement by using random numbers and, as a result, the probability to allow the mesh points to be moved within a relatively wide range becomes high, thus enabling high-speed generation of the mesh.

With another configuration as above, since each mesh point are moved for the re-placement in the direction in which the evaluation function becomes an extreme value at which the evaluation function reaches the optimum placement state and, in particular, when each mesh point is moved by a comparatively small distance from the initial mesh point, the mesh can be generated with high speed and accuracy.

With another configuration as above, the mesh points are deleted for the re-placement, thus the mesh in which necessary and sufficient number of mesh points are placed can be generated with high accuracy.

With another configuration as above, the mesh points are moved and re-placed by using random numbers in the first probability or the mesh points are re-placed by moving the mesh points in the direction in which the evaluation function is locally minimized and, therefore, for example, by setting so that the first probability decreases gradually and the second probability increases gradually with increase in the number of times of the re-placement, each mesh point is moved in a wide range at the initial stage of the re-placement of the mesh points and, when the re-placement is nearing completion, each mesh point is locally moved, thus increasing the probability of the re-placement and enabling smooth generation of meshes with higher accuracy.

With another configuration as above, the re-placement is permitted which is implemented by moving or deleting the mesh points in a manner that the evaluation function is changed to a state being reverse to the optimum placed state, thus enabling high-accurate generation of the mesh even if there are given conditions sticking to a local solution required in a precise calculation or conditions interfering with convergence.

With another configuration as above, the method can be applied to the process simulation of semiconductor devices, thus enabling high-speed and high accurate generation of the mesh.

With still another configuration as above, the storage region is made compact which is required to store information necessary for the calculation, making development to three dimensional simulation comparatively easy.


BRIEF DESCRIPTION OF THE DRAWINGS

The above and other objects, advantages and features of the present invention will be more apparent from the following description taken in conjunction with the accompanying drawings in which:

Fig. 1 is a flowchart explaining a method for generating well-posed meshes according to a first embodiment of the present invention;
Fig. 2 is a flowchart explaining a method for judging a permission of movement employed in the well-posed mesh generating method according to a first embodiment of the present invention;
Fig. 3 is a block diagram showing configurations of a well-posed mesh generating processing program according to the first embodiment of the present invention;
Fig. 4 is a block diagram showing configurations of a simulation device according to the first embodiment of the present invention;
Fig. 5 is a schematic diagram showing a state of placing an initial mesh point in a semiconductor device as a simulated object in a middle of manufacturing, as employed in the method according to the first embodiment of the present invention;
Fig. 6 is a schematic diagram showing a state of placing well-posed mesh points employed in the method according to the first embodiment of the present invention;
Fig. 7 is a flowchart explaining a movement permission judgement method employed for generation of well-posed meshes according to a second embodiment of the present invention;
Fig. 8 is a schematic diagram showing a state of placing an initial mesh point in semiconductor devices in a middle of manufacturing to be simulated according to the second embodiment of the present invention;
Fig. 9 is a schematic diagram showing a state of placing well-posed mesh points according to the second embodiment of the present invention;
Fig. 10 is a flowchart explaining a method for generating well-posed meshes according to a third embodiment of the present invention;
Fig. 11 is a flowchart explaining a method for judging a permission of change employed in the well-posed mesh generating method according to the third embodiment of the present invention;
Fig. 12 is a block diagram showing configurations of a well-posed mesh generating processing program according to the third embodiment of the present invention;
Fig. 13 is a schematic diagram showing a state of placing an initial mesh point in a semiconductor in a middle of manufacturing to be simulated according to the third embodiment of the present invention;
Fig. 14 is a schematic diagram showing a state of placing well-posed mesh points according to the third embodiment of the present invention;
Fig. 15 is a flowchart explaining a method for generating well-posed meshes according to a fourth embodiment of the present invention;
Fig. 16 is a block diagram showing configurations of a well-posed mesh generating processing program according to the fourth embodiment of the present invention;
Fig. 17 is a flowchart explaining a method for generating well-posed meshes according to a fifth embodiment of the present invention;

Fig. 18 is a block diagram showing configurations of a well-posed mesh generating processing program according to the fifth embodiment of the present invention; and

Fig. 19 is a diagram explaining a conventional method for generating meshes.

## DETAILED DESCRIPTION OF THE PREFERRED EMBODIMENTS

Best modes of carrying out the present invention will be described in further detail using various embodiments with reference to the accompanying drawings.

## First Embodiment

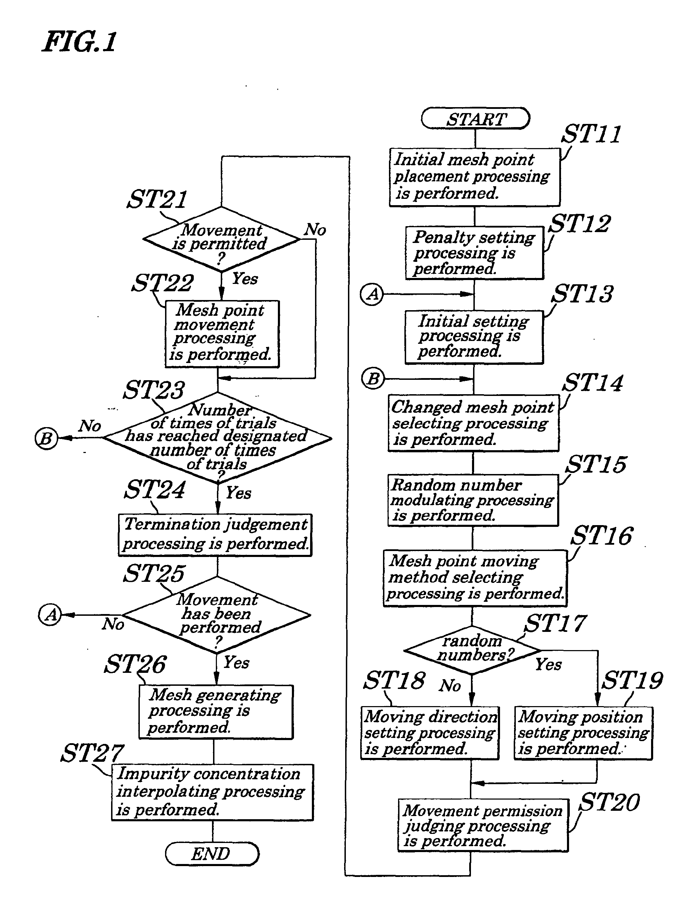

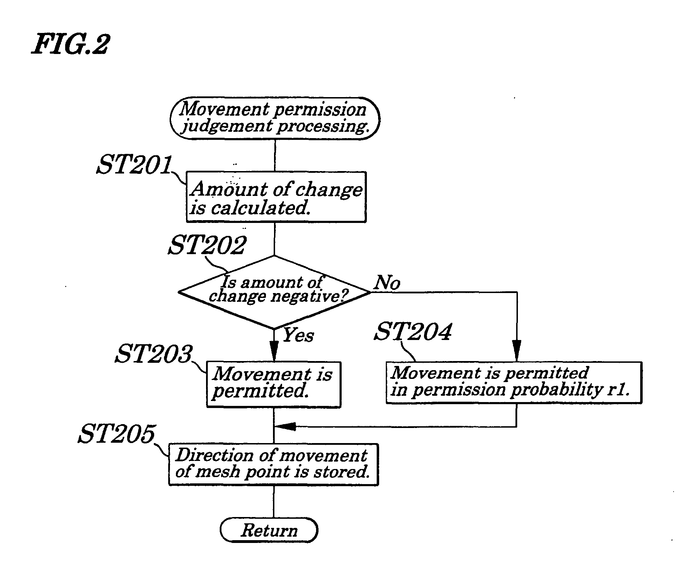

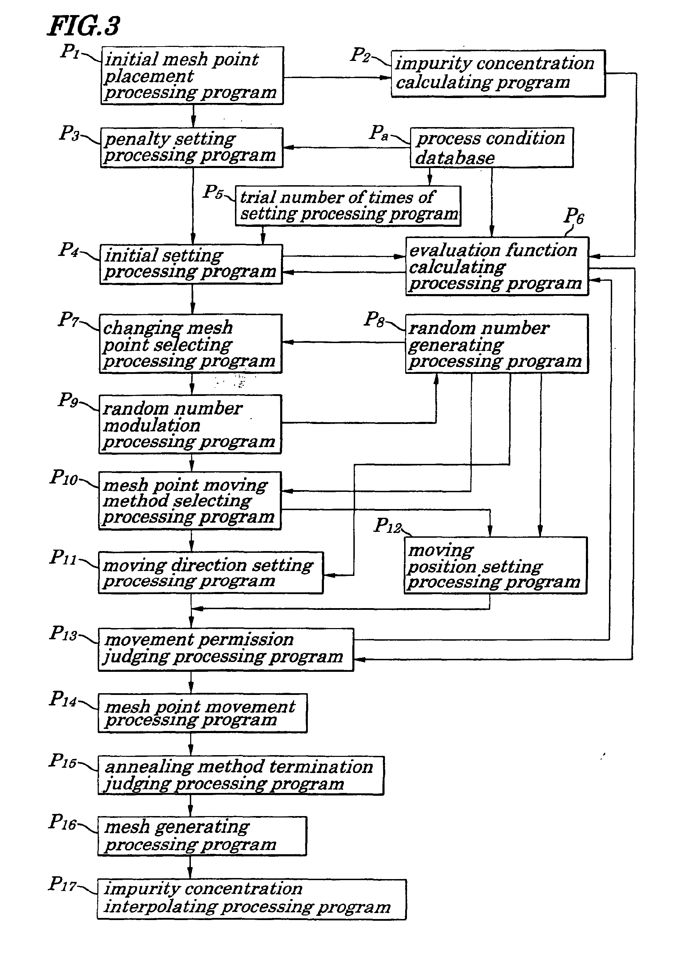

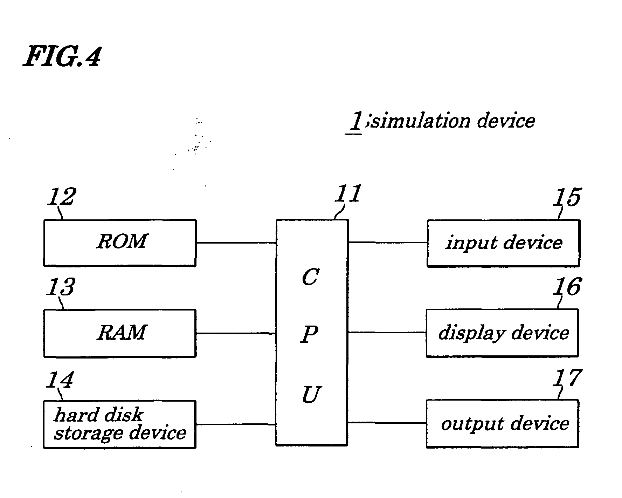

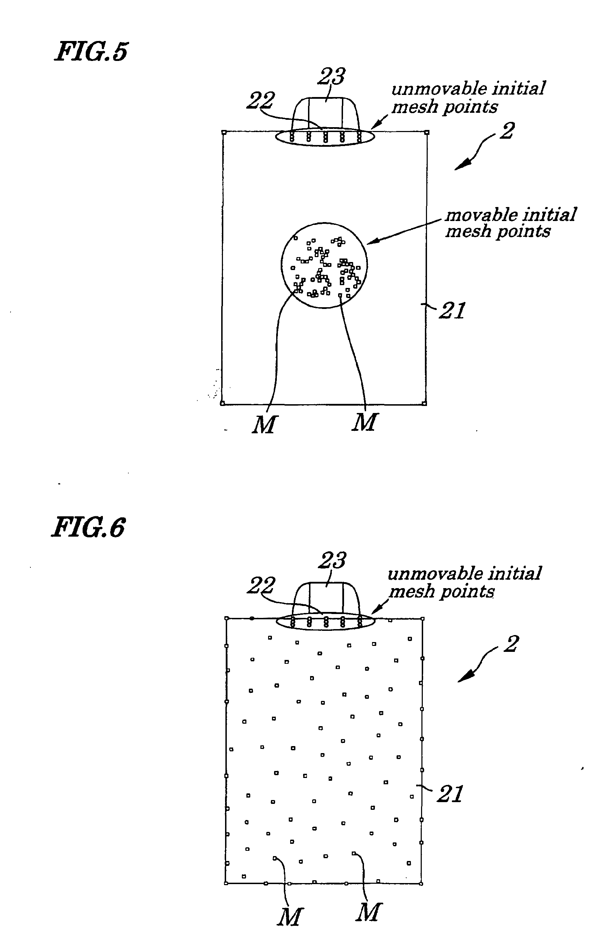

Figure 1 is a flowchart explaining a method for generating well-posed meshes according to a first embodiment. Figure 2 is a flowchart explaining a method for judging a permission of movement employed in the well-posed mesh generating method. Figure 3 is a block diagram showing configurations of a well-posed mesh generating processing program according to the first embodiment. Figure 4 is a block diagram showing configurations of a simulation apparatus according to the first embodiment. Figure 5 is a schematic diagram showing a state of placing initially mesh points in a semiconductor device in a middle of manufacturing to be simulated in the method according to the first embodiment. Figure 6 is a schematic diagram showing a state of placing well-posed mesh points employed in the method according to the first embodiment.

A simulation device 1, as shown in Fig. 4, is made up of a large-sized computer or a work station to perform a simulation, having a CPU 11 used to control each of components of the simulation device 1 in accordance with a specified control program, a ROM 12 used to store a control program to be executed by the CPU 11, a RAM 13 serving as a working area of the CPU 11, a hard disk storage device 14 used to store specified data or a processing program, an input device 15 made up of a keyboard or a like, a display device 16 and an output device 17 used to output results from the simulation.

The hard disk storage device 14 stores various data and various processing programs such as well-posed mesh generating processing program or a like. It also, stores process conditions for each process in a form of a database and results from simulations of each process that have been performed, as information about meshes. To generate a new well-posed mesh, process conditions (for example, conditions designated by setting regions which cannot be moved and/or by setting a direction of movement which is limited and/or by setting regions where mesh points are to be placed at a high or low density) being optimum for a process to be presently simulated are retrieved from the database, based on previous process conditions. The well-posed mesh generating program describes a procedure for finding out an optimum placement of the mesh point to generate the well-posed mesh by an "annealing method" configured so as to be similar to, for example, an. In the annealing method employed in the embodiment, a re-placement of the mesh points is repeated a great number of times so that an evaluation function F corresponding to energy during a process of the annealing and, during a repeated re-placement process, the re-placement interfering with a minimization of the evaluation function F is permitted in a permission probability r given by the following equation (1) corresponding to Boltzman probability distribution. This evaluation function F takes on a specified value corresponding to a placement pattern of the mesh point which is used as an index for achieving the optimum placement of mesh points.

$$r = \exp(-\Delta F/t) \tag{1}$$

In equation (1), change $\Delta F$ represents an amount of a change occurring before and after the re-placement of the evaluation value F; and judgement condition value t represents a judgement condition value used as a parameter corresponding to a temperature in a process of "annealing". Probability r is set so that it decreases due to a change in the judgement condition value for judgement as the number of trials of the re-placement corresponding to time in the process of the "annealing" increases. The well-posed mesh generating program, as described later, includes an evaluation function calculation processing program P6 used to calculate the evaluation function F in all regions or in a local region, a mesh point movement method selection processing program P10 in which the mesh point is moved by a method where the mesh point is moved in a direction to cause an evaluation function to become a minimum value or by a method where a destination place is selected by random numbers and a movement permission judging processing program P13 used to permit re-placement interfering with minimization of the evaluation function in a specified probability.

Next, method for generating the well-posed mesh will be described by referring to Fig. 1 to Fig. 3, Fig.5 and Fig. 6. In the example, a process following oxidation of a gate will be explained. An evaluation function F1 given by the following equation (2) is used in the evaluation function calculating processing.

$$F1 = \sum_{i=1}^{n} \left[ \frac{1}{\min\left\{ \sqrt{(x_i - x_j)^2 + (y_i - y_j)^2} \right\}} + Q_i \right] \qquad \cdots (2)$$

In equation (2), "n" represents the number of mesh points used when the evaluation function F1 is calculated, $(x_i, y_i)$ represents coordinates of a mesh point $M_i$ with a number i, $(x_j, y_i)$ represents coordinates of a mesh point $M_j$ ($j \neq i$) with a number j which is an arbitrary point in a vicinity of the mesh point $M_i$. A penalty value $Q_i$ represents a penalty value to be assigned to a specified mesh point $M_i$ depending on a process condition. When the mesh point is placed in a manner that the evaluation function F1 is minimized, a distance between mesh points is made uniform.

An initial mesh point placement processing program P1 is first executed (Step ST11, see Figs. 1 and 3). In processing, based on information about well-posed mesh information produced by the next previous process simulation, information about coordinates of the initial mesh point of a process to be presently simulated are transferred to arrangement data used to generate the well-posed mesh. To transfer the information, a hash table enabling a high speed retrieving is used.

Moreover, the information about the mesh described above can be used when an impurity concentration at a specified position is obtained by an impurity concentration calculating program P2. As shown in Fig. 5, initial mesh points are placed. Figure 5 illustrates a state of a semiconductor device in a middle of manufacturing in which its gate electrode 23 is formed on a silicon substrate 21 through a gate oxide film 22 and in which an impurity (such as an ion) has not been doped yet. Here, for example, most of the mesh points M are placed at a center portion of a region where the mesh points are to be placed and few mesh points placed immediately below the gate are set in a manner that they are unmovable. This inhibits changes of a profile caused by impurity concentration interpolation.

Next, a penalty setting processing program P3 is executed (Step ST12). In the processing, by referring to data stored in a process condition database Pa, a penalty value Q is set to the mesh point M so that the evaluation function F1 becomes high in the movement.

Next, an initial setting processing program P4 is executed (Step ST13). First, in an evaluation function calculating processing program P6, by using the above equation (2), the evaluation function F10 is calculated for all regions where mesh points M are placed, that is, the evaluation function F10 is obtained by substituting the total number of mesh points "n0" instead of "n" into the equation (2). This evaluation function F10 is used, if necessary, as a coefficient for standardization.

Next, the judgement condition value t used as the parameter is calculated. The judgement condition value t is so set that it remains constant at least while processing of re-placement is performed the number of times for designated trials described later, that it decreases from a high to low value as the processing of re-placement shown in Step ST13 to Step ST24 is carried out repeatedly and also that a specified calculation accuracy or a speed of convergence is obtained, for example, in response to process conditions.

Moreover, in a trial number setting processing program P5, the number of times for designated trials is calculated which is the number of times of repetition of re-placement processing shown in Step ST14 to Step ST22 described later. In the trial number setting processing program P5, the suitable number of times of designated trials is set based on data contained in the process condition database Pa. The number of times of designated trials is set within a range of the number of times being, for example, five to one times larger than the total number of all meshes. Then, random number mesh selecting probability to be used in a random modulation processing program P9 is calculated. Random number mesh selecting probability is so set that it decreases from a high to low value which corresponds to the judgement condition value t. In Step ST14, a change mesh point selecting processing program P7 is executed. In this processing, the mesh point to be moved is selected based on random numbers generated in a random number generating processing program P8.

Next, a random number modulation processing program P9 is executed (Step ST15). In this processing, random numbers are generated by the random number generating processing program P8 in response to a random mesh selecting probability which is set so as to correspond to the judgement condition value t and moves mesh points by random numbers and the generated random numbers to be used for selection of the mesh point moving method (Step ST16 described later) are modulated. That is, there are two types of probabilities which can be used to select a designation place where the mesh point is moved, one being used in a method in which the mesh point is moved in a direction where the evaluation function F1 becomes a minimum value locally and another being used in a method in which the mesh point is moved in accordance with random numbers. The above random number mesh selecting probability is employed in the method in which the mesh point is moved in accordance with random numbers. Its initial value is, for example, 90%. This value is set so that it decreases to, for example, 10% as the judgement condition value t decreases. By setting the random mesh selecting probability, the probability that the mesh is moved in a wide range at an initial stage of the re-placement of the mesh points can be made high and, when a state is settled to be approximately a specified state of the placement of the mesh point and is nearing completion, the probability that the mesh point is locally moved to perform the re-placement as a fine adjustment is increased.

Next, a mesh point movement method selection processing program P10 is executed (Step ST16). In this processing, when a destination place of the mesh point is decided, either of moving methods can be selected by using random numbers. That is, one moving method is to move the mesh point to a direction in which the evaluation function F1 locally becomes a minimum and the other method is to decide coordinates of the destination place only by random numbers.

Next, in Step ST17, whether the method to select the destination place only by random numbers is employed or not is judged and, if the method to move the mesh point in a direction in which the evaluation function F1 locally becomes a minimum is employed, the routine proceeds to Step ST18 and, if the method to select the destination place only by random numbers, the routine proceeds to Step ST19.

In Step ST18, a moving direction setting processing program P11 is executed. In the processing, the mesh point is moved in a direction in which the evaluation function F1 becomes a minimum value locally. At this point, the direction in which the same mesh point was moved the last time is employed. When the mesh point is moved by the method in which the mesh point is moved to a direction in which the evaluation function F1 locally becomes a minimum value for the first time, the value of the evaluation function F1 is calculated repeatedly in a local region in the vicinity of the mesh point and the direction in which the evaluation function F1 becomes a minimum value is found. Then, the routine proceeds to Step ST20. The movement distance is determined in the local region and is set by the generated random numbers.

In Step ST19, a moving position setting processing program P12 is executed. In the processing, coordinates of the mesh point to be moved are selected by random numbers. Then, the routine proceeds to Step ST20.

In Step ST20, a movement permission judging processing program P13 is executed. In the processing, whether the movement of the mesh point to the designation place selected by Step ST18 or Step ST19 is permitted or not is judged. In the evaluation function calculating processing program P6, a value of the evaluation function F1 obtained before and after the movement is calculated in the vicinity of the moved mesh point is calculated and, based on the calculation result, an amount of a change $\Delta$F1 obtained before and after the movement of the evaluation function F1 is calculated (Step ST201 in Fig. 2). Next, whether the amount of the change $\Delta$F1 is a negative value or not is judged (Step ST202). If the amount of the change $\Delta$F1 is the negative value, the movement of the mesh point is permitted unconditionally (Step ST203). On the other hand, if the amount of the change $\Delta$F1 is not a negative value, the movement is permitted in a specified permission probability r1 given by the following formula (3) (Step ST204). The direction in which the mesh point is moved in the present processing is stored so that it can be used in a next movement of the mesh point (Step ST205).

$$rl = \exp(-\Delta F1/t) \tag{3}$$

Even if the evaluation function F1 increases, by moving the mesh point in the specified permission probability r1, for example, even if the re-placement of the mesh point is in progress in a manner that the evaluation function F1 calculated in all regions becomes not the least value but a minimum value, there can be provided a possibility that an exit can be made from this state and the re-placement can be promoted so that the evaluation function F1 is minimized.

As described above, by decreasing the judgement condition value t as the number of trials of the re-placement of the mesh point is decreased, since the specified permission probability r1 is gradually decreased at the same time, optimum placement can be smoothly achieved.

Next, whether the movement of the mesh point is permitted or not is judged (Step ST21). At this point, if the movement is permitted, the routine proceeds to Step ST22 and, if the movement is not permitted, the routine proceeds to Step ST23.

In Step ST22, a mesh point movement processing program P14 is executed. In the processing, the mesh point moves to a destination place selected by Step ST18 or Step ST19. In Step ST23, whether the number of times of the mesh point re-placement reaches the number of times of trials of the re-placement designated in Step ST13, that is, whether the number of times of the mesh point re-placement is five to one times larger than the designated times of the trials, is judged. If the number of the trial reaches the designated number of times of trials, the routine proceeds to Step ST24 and, if the number of the trial does not reach the designated number of times of trials returns to Step ST14 and a series of the mesh point re-placement processing is repeated.

In Step ST24, an annealing method termination judging processing program P15 is executed. In this processing, a rate of an decrease ($\Delta$F/F1) of the evaluation function F1 calculated for all the mesh points reaches a specified lower limit, for example, of 1%, the movement of the mesh point (that is, the re-placement) is terminated. The lower limit of the rate of the decrease is set according to accuracy of the mesh point to be required. If the permitted number of mesh points becomes, for example, 0 (zero), it can be judged that the movement is terminated.

Next, in Step ST25, if the movement is judged to have been terminated, the routine proceeds to Step ST26 and, in cases other than this, the routine returns back to Step ST13. In Step ST13, the designated number of the trial is renewed and the judgement condition value t is changed and the mesh point is again moved. Thus, as shown in Fig. 6, the placement of the well-posed mesh point in which a distance between mesh points is made uniform is completed.

In Step ST26, a mesh generating processing program P16 is executed. In this processing, each of the mesh points is connected to produce a triangular mesh.

Lastly, in Step ST27, an impurity concentration interpolating processing program P17 is executed. In this processing, an impurity concentration at each of the mesh points is set, based on the impurity concentration at a mesh point used as a representative mesh point existing within each of control volumes (the "control volume" represents a region obtained by connecting circumcenters of triangles each being linked to the mesh point) and based on a ratio of an area of the control volume of the initial mesh to an area of the control volume of the well-posed mesh and then the impurity concentration is interpolated by using an integration interpolating method to complete a new mesh.

Thus, according to the embodiment, since generation of the mesh is performed after the placement of the mesh points is optimized, the well-posed mesh can be generated with high speed and high accuracy. Moreover, since the re-placement of the mesh point M in the specified region, for example, existing immediately below the gate is performed with penalty value Q acting to increase the evaluation function F1 given at the time of the movement of the mesh, as in the case of this embodiment, the movement of the mesh point is difficult to occur, with the penalty value Q being given, in a process in which the re-placement of the mesh is made so that the evaluation function F1 is minimized, thus preventing the mesh point existing immediately below the gate from being moved. Therefore, for example, by minimizing the above evaluation function F1 containing the penalty value Q, the specified condition that "the mesh point existing immediately before the gate is not allowed to be moved" can be met, thus enabling the optimum placement of the mesh points. Moreover, since conditions being most suitable to a present process are set by referring to data contained in the process condition database Pa, the well-posed mesh being acceptable in the process can be generated with high speed and high accuracy. Moreover, even if the evaluation function F1 increases, by moving the mesh point in the specified permission probability r1, for example, even if the re-placement of the mesh point is in progress in a manner that the evaluation function F1 obtained in all regions becomes not a minimum value but a least value, there can be provided a possibility that an exit is made from this state and the re-placement is made in a manner that the evaluation function F1 is minimized. That is, when the re-placement of the mesh points is repeated in a manner that the evaluation function F1 always decreases more than in the previous trial, in some states where the initial mesh points have been initially re-placed, at a time when a state of the re-placement where the evaluation function F1 becomes the least value at the initial stage of the re-placement, there is a possibility that, even if the least value is one of many least values and not the minimum value, calculating processing is stopped because the least value is misconstrued as a minimum value. Here, by permitting the re-placement in which the evaluation function F1 increases even in a low probability, there is a possibility that another least value (containing a minimum value) is found out, thus enabling the optimum placement of the mesh points.

The judgement condition value t decreases gradually as the number of times of trials for the mesh point re-placement decreases and, as a result, the permission probability decreases gradually, thus enabling smooth and optimum placement. Therefore, even if conditions sticking to a local solution calculated by a precise calculation and/or conditions making it difficult to converge are set up, the well-posed mesh can be generated with high accuracy. Moreover, by employing the annealing method used in the embodiment, it becomes easy to re-place the mesh point. Therefore, when the mesh points are locally re-placed or an amount of the change in the impurity concentration is small, the well-posed mesh can be generated with high speed. For example, in many cases of the process simulation, the change in the impurity concentration is local between processes and the number of mesh points to be moved is few, by applying the method of the embodiment to the process simulation, the well-posed mesh can be generated with higher speed. To determine a destination place to which the mesh point is moved, either of methods including one to move the mesh points in the direction in which the evaluation function F1 is locally minimized and another to select the destination place by random numbers is selected and the random number mesh selecting probability is set so that it gradually decreases in response to the change of the judgement condition value t and therefore the probability in which the mesh point is moved in a wide range at an initial stage of the mesh point re-placement is increased and the probability in which the mesh points are moved locally when the re-placement is nearing completion is increased, thus enabling the well-posed mesh to be generated with higher accuracy.

Moreover, when the mesh point is moved in the direction in which the evaluation function F1 is locally minimized, in the second re-placement and, thereafter, the same direction as in the previous re-placement is used for the present re-placement, thus enabling high speed re-placement. Furthermore, since the mesh point can be re-placed by only information including coordinates and/or impurity concentration at each of the mesh points, without generating

**EP 1 150 255 A2**

any mesh, high-speed generation of the well-posed mesh is made possible.

Second Embodiment

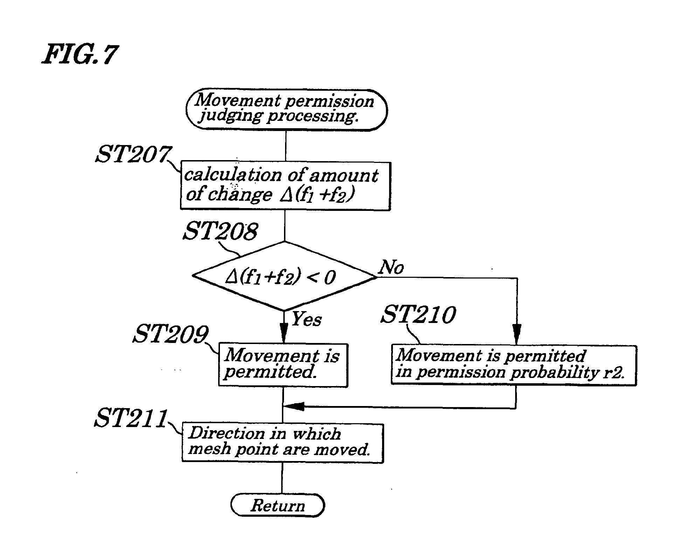

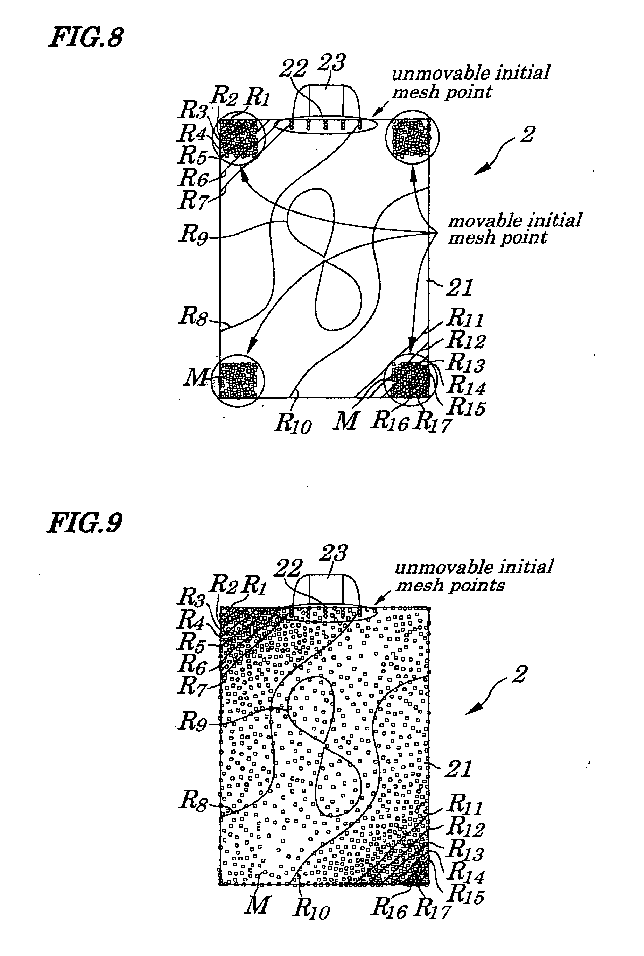

Figure 7 is a flowchart explaining a movement permission judgement method employed for generation of well-posed meshes according to a second embodiment of the present invention. Figure 8 is a schematic diagram showing a state of placing initially mesh points in a semiconductor device in a middle of manufacturing to be simulated according to the second embodiment. Figure 9 is a schematic diagram showing a state of placing well-posed mesh points according to the second embodiment.

Method of the second embodiment differs from that in the first embodiment in that, a permission of a replacement of mesh points is judged by using, in addition to an evaluation function f1 corresponding to an evaluation function F1, an evaluation function f2 corresponding to an evaluation function F2 for a gradient of impurity concentration given by the following equation (4) and, to set a direction to be next used when the mesh point is moved in a direction in which an evaluation function is locally minimized, a direction in which the evaluation function out of the evaluation functions f1 or f2 decreases more before and after a movement of the mesh point is selected and the direction in which the evaluation function is locally minimized is used as a direction in which the mesh point is moved in a next trial.

$$F2 = \sum_{i=1}^{n} \max\left(\left|c_i - c_j\right|\right) \qquad \cdots (4)$$

In equation (4), "$C_i$" represents an impurity concentration at a mesh point $M_i$ with a number "i" and "$C_j$" representing the impurity concentration at a mesh point $M_j$ in a vicinity of the mesh point $M_i$. In order to make smaller the evaluation function F2, the mesh point has to be so placed as to make small a difference in the impurity concentration among neighboring mesh points and, by minimizing a value combination of the evaluation functions F1 and F2 (F1 + F2), the mesh points can be placed so that the difference in the impurity concentration among neighboring mesh points is made uniform.

Moreover, an evaluation function calculating processing program P6 includes procedures for calculation of the evaluation functions F1(f1), F2(f2) and an amount of a change $\Delta$ (f1 + f2) and selection of the evaluation function having a larger amount of the decrease before and after the movement of the mesh points.

Next, method for generating well-posed meshes, being centered on a method of setting a movement direction and on a method of judging movement permission method will be described below by referring to Fig. 1, Fig. 7, Fig. 8, and Fig. 9. In the second embodiment, an initial mesh point is placed as shown in Fig. 8. Here, most of mesh points M are placed in four corner portions as movable mesh points in regions in which mesh points are to be placed and few mesh points existing in a region immediately below a gate are placed as unmovable mesh points. According to the embodiment, as shown in Fig. 8, impurity concentrations D1, D2, ⋯, D17 on isoconcentration lines R1, R2, ⋯, R17 are set, in all regions in which the mesh points M are placed so that they change consecutively showing a state of (D1 (=D17) > D2 (=D16) > D3 (=D15 >D4 (=D14) > D5 (=D13) > D6 (=D12) > D7 (=D11) > D8 (=D10) > D9) and impurity concentration gradients are maximized in the upper left corner and in the right left corner. In Step ST13, in all the regions where the mesh points M are placed, evaluation functions F10 and F20 are calculated to use them as normalized coefficients. In the subsequent calculating processing, instead of the evaluation functions F1 and F2 obtained by solving equations (2) and (4), the evaluation functions f1 and f2 given by the following equations (5) and (6) are used.

$$f1 = F1/F10 \qquad\qquad (5)$$

$$f2 = F2/F20 \qquad\qquad (6)$$

Moreover, in Step ST18, a moving direction setting processing program P11 is executed. In processing, the mesh point is moved in a direction in which the evaluation function f1 or the evaluation function f2 is locally minimized. At this point, the direction in which the same mesh point was moved the last time and which has been stored in advance is employed. If the mesh point is moved by the method in which the mesh point is moved in a direction in which the evaluation function f1 or the evaluation function f2 is locally minimized, the evaluation function f1 and the evaluation function f2 are calculated repeatedly in a local region in a vicinity of the mesh point to obtain a direction in which the evaluation function f1 or f2 is most decreased. Then, routine proceeds to Step ST20. Moreover, the movement distance is determined at a local region and is set by generated random numbers.

In Step ST19, a moving position setting processing program P12 is executed. In this processing, coordinates of a destination place of the mesh point are selected by random numbers. Then, the routine proceeds to Step ST20.

In Step ST20, a movement permission judging processing program P13 is executed. In this processing, whether the movement of the mesh point to the destination place selected by Step ST18 or Step ST19 is permitted or not, is judged.

In the evaluation function calculating processing program P6, values obtained before and after the movement of the evaluation functions f1 and f2 are calculated in a vicinity of the mesh point and an amount of the change $\Delta$ (f1 + f2) in a sum (f1 + f2) of the evaluation functions f1 and f2 obtained before and after the movement is calculated (Step ST207) (Fig. 7).

Next, whether an amount of the change $\Delta$ (f1 + f2) is a negative value or not is judged (Step ST208). If the amount of the change $\Delta$ (f1 + f2) is the negative value, the movement of the mesh points is permitted unconditionally (Step ST209). If the amount of the change $\Delta$ (f1 + f2) is not a negative value, the movement of the mesh points is permitted in a specified permission probability r2 given by the following equation (7) (Step ST210).

$$r2 = \exp\{-\Delta(f1 + f2)/t\} \tag{7}$$

Next, a direction in which the evaluation function f1 or f2 having a smaller amount of the change $\Delta$f1 or $\Delta$f2 (for example, if both the amounts of the change $\Delta$ f1 and $\Delta$ f2 are negative values, the evaluation function having a larger absolute value $|\Delta$f1$|$ or $|\Delta$f2$|$ is selected) becomes a minimum value, is obtained and the obtained direction is stored as the movement direction which is used when the mesh points are moved by a method in which the mesh points are moved in the direction in which the evaluation function f1 or f2 is locally minimized (Step ST211). When the movement of the mesh points is judged to have been terminated in Step ST25, as shown in Fig. 9, the placement of the well-posed mesh points in which a difference in impurity concentration among neighboring mesh points is made uniform is completed.

By configuring as above, substantially the same effect as in the first embodiment can be obtained. Additionally, by combining the two evaluation functions f1 and f2 so that two conditions are met, the well-posed mesh can be generated with high accuracy. That is, by combining the evaluation function f1 used to make uniform a distance between mesh points with the evaluation function f2 used to decrease a difference in the impurity concentration among neighboring mesh points, for example, by minimizing (f1 + f2), the well-posed mesh in which the difference in the impurity concentration among neighboring mesh points has been made uniform can be generated with high accuracy.

Moreover, when a subsequent movement direction required when the mesh points are moved next time in a direction in which the evaluation function is locally minimized is set, since the evaluation function having a largely decreased value before and after the movement of the mesh points out of the evaluation functions f1 and f2 is selected and the direction in which the evaluation function is locally minimized as the required subsequent movement direction is used, high-speed re-placement of the mesh points can be achieved.

Third Embodiment

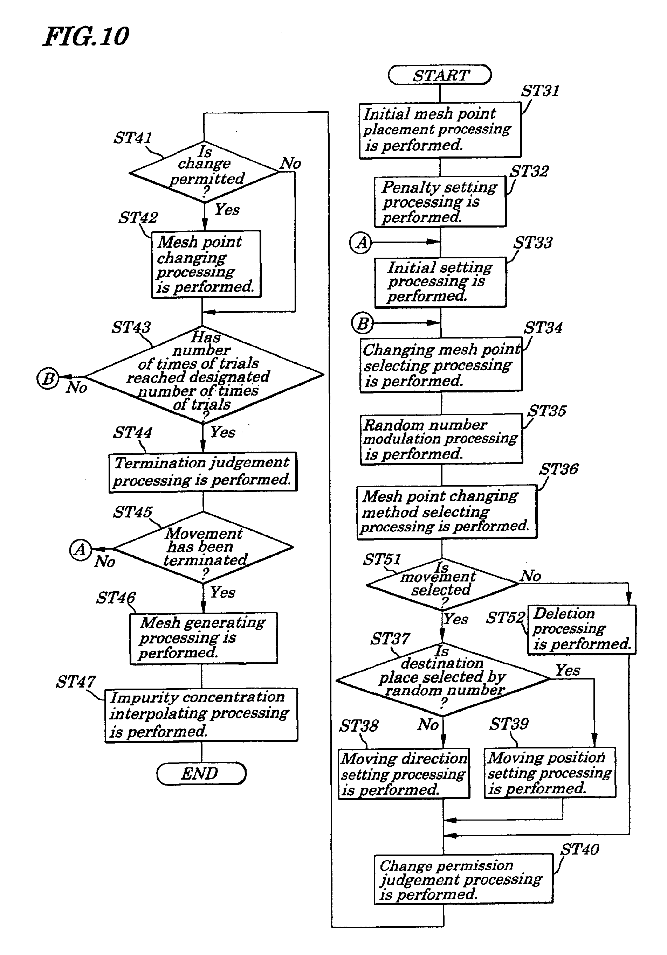

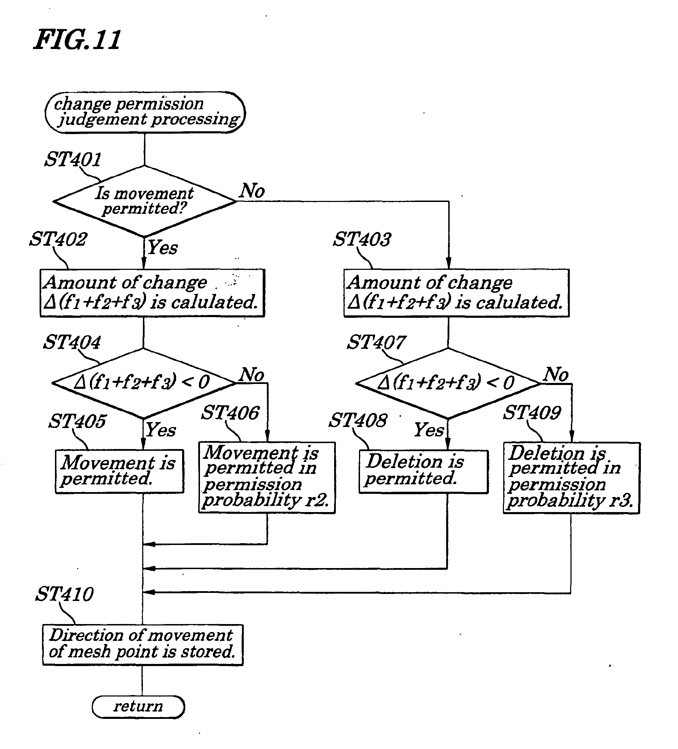

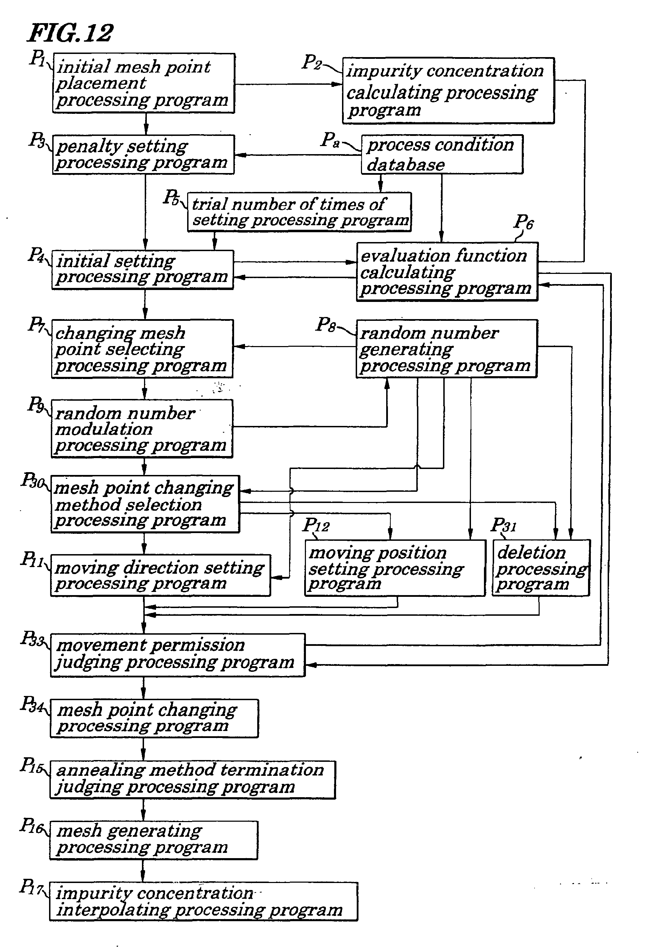

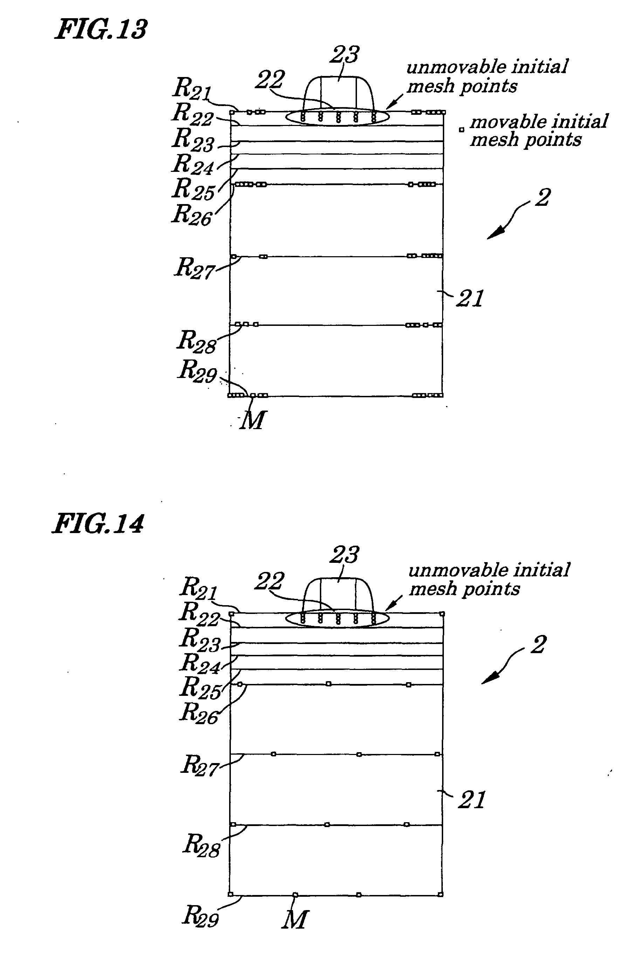

Figure 10 is a flowchart explaining a method for generating well-posed meshes according to a third embodiment of the present invention. Figure 11 is a flowchart explaining a method for judging a permission of changes in a well-posed mesh generating method according to the same embodiment. Figure 12 is a block diagram showing configurations of a well-posed mesh generating processing program according to the same embodiment of the present invention. Figure 13 is a schematic diagram showing a state of placing initial mesh point in a semiconductor device in a middle of manufacturing to be simulated according to the same embodiment. Also, figure 14 is a schematic diagram showing a state of placing an initial well-posed mesh point according to the same embodiment.

A method of the third embodiment differs from that in the second embodiment in that, in addition to movements of mesh points, deletion of mesh points is allowed based on an evaluation function f3 corresponding to an evaluation function F3 given by an equation (8) and that, when a subsequent movement direction required when the mesh points are moved next time in a direction in which an evaluation function is locally minimized is set, the evaluation function having a largely decreased value before and after movement of the mesh points out of evaluation functions f1, f2, and f3 is selected, direction in which the evaluation function is locally minimized as a required subsequent movement direction is used.

$$F3 = \sum_{i=1}^{n} \frac{1}{\min\left(\left|c_i - c_j\right|\right)} \qquad \cdots (8)$$

In equation 8, "$C_j$" represents an impurity concentration at a mesh point $M_j$ with a number "j" ($j \neq i$) having a minimum distance from the mesh point $M_j$. The evaluation function F3, when each of most neighboring mesh points has the same impurity concentration, is maximized, and when the mesh point having the same concentration is deleted, becomes smaller. Therefore, if difference in the impurity concentration among neighboring mesh points is very small, by deleting this mesh point based on the evaluation function F3, optimum mesh points from which excessive mesh points are removed can be obtained.

A well-posed mesh generating processing program contains a deletion processing program P31 (Fig. 12) to delete selected mesh points. Moreover, in the third embodiment as shown in Fig. 12, instead of a movement permission judging processing program P13, a change permission judgement processing program P33 containing judging processing of permission to delete based on a value of the evaluation function f3 is used. A mesh point changing method selection processing program P30 includes processing of selecting any one of procedures for moving the mesh point in a direction in which the evaluation function f1 or f2 is locally decreased, for moving the mesh point by using random numbers, and for deleting the selection of the mesh point. The evaluation function calculating processing program P6 includes processing of calculating evaluation functions F1 (f1), F2 (f2), F3 (f3) and an amount of change $\Delta$ (f1 + f2 + f3) and processing of selecting a most decreased evaluation function.

Next, the method for generating well-posed meshes according to the third embodiment is described by referring to Fig. 10 to Fig. 14. First, an initial mesh point placement processing program P1 is executed (Step ST31). As shown in Fig. 13, an initial mesh point is initially placed. Most of the mesh points are placed on both sides of regions in which mesh points are to be placed as a movable mesh point and a small number of mesh points are placed immediately below a gate in a manner that the mesh points cannot be moved. An execution of an impurity concentration calculating program P2 follows.

According to the third embodiment, as shown in Fig. 13, the impurity concentrations D21, D22, $\cdots$, D29 on isoconcentration lines R21, R22, $\cdots$, R29 are set, in all regions in which mesh points M are placed so that they change consecutively showing a state of (D21 > D22 > D23 >D24 > D25 > D26 > D27 > D28 > D29) and impurity concentration is set so as to be one-dimensionally changed and to be maximized in the upper left corner and in the right left corner.

Next, a penalty setting processing program P3 is executed (Step ST32). In this processing, by referring to data stored in a process condition database Pa, a penalty value Q is set to the mesh point M so that the evaluation function F1 becomes high in the movement.

Next, the initial setting processing program P4 is executed (Step ST33). In this processing, in all regions where the mesh points M are placed, evaluation functions F10, F20 and F30 are calculated by substituting a total number of mesh points "n0" instead of "n" into equations (2), (4) and (8) and obtained values are used as normalized coefficients. That is, in subsequent calculating processing, instead of the evaluation functions F1, F2, and F3 obtained by solving the equations (2), (4), and (8), the evaluation functions f1, f2, and f3 obtained by solving equations (5), (6), and the following equation (9) are used.

$$f3 = F3/F30 \qquad\qquad (9)$$

Here, a judgement condition value "t" , the number of times for designated trials, a random number selecting probability to move the mesh points by random numbers and a deletion selecting probability to delete the mesh point are calculated.

Next, the changing mesh point selecting processing program P7 is executed (Step ST34). In this processing, based on a random number generating processing program P8, mesh points to be moved or deleted are selected.

Next, a random number modulation processing program P9 is executed (Step ST35). In this processing, a random number which is generated by the random number generating processing program P8 in accordance with a set random number mesh selecting probability and with a deletion selecting probability and which is used for selecting a method for the movement, is modulated.

An initial value of the random number selecting probability and the deletion selecting probability is, for example, 90% and 1% respectively, and an initial value of a probability used to select a method in which the mesh points are moved in a direction in which the evaluation function f1 or the evaluation function f2 is locally minimized is 9%.

Next, the mesh point changing method selection processing program P30 is executed (Step ST36). In this processing, any one of methods including one to move the mesh point in the direction in which the evaluation function f1 or f2 is locally minimized, another to select the destination place by using random numbers, and another to delete the mesh point is selected by using random numbers.

Next, in Step ST51, whether a method to move the mesh point is selected or not is judged. If the movement is selected, the routine proceeds to Step ST37 and, if the deletion is selected, the routine proceeds to Step ST52.

Next, in Step ST37, whether a method to select a destination place by using random numbers is employed or not is judged. If the method in which the mesh points are moved in a direction in which the evaluation function f1 or f2 is locally minimized is employed, the routine proceeds to Step ST38 and, if the method to select the destination place is employed, the routine proceeds to Step ST39.

In Step ST38, a moving direction setting processing program P11 is executed. In this processing, the mesh points are moved in the direction in which the evaluation function f1 or f2 is locally minimized. At this point, the direction in which the same mesh point was moved the last time and which was stored in advance is employed as the direction to be used this time. To move the mesh point by the method in which the mesh point is moved in the direction in which the evaluation function f1 or f2 is locally minimized for the first time, the evaluation function f1 and f2 are calculated repeatedly in a local region existing in a vicinity of the above mesh point and a direction in which the evaluation function f1 or f2 is most decreased is calculated. Moreover, the movement distance is determined in the local region and is set by the generated random numbers. Then, the routine proceeds to Step ST40.

In Step ST39, a moving position setting processing program P12 is executed. In this processing, coordinates of a destination place of the mesh point are selected by using random numbers . Then, the routine proceeds to Step ST40.

In Step ST52, the deletion processing program P31 is executed. In this processing, the mesh point selected in Step 34 is deleted. Then, the routine proceeds to Step ST40.

In Step ST40, the change permission judgement processing program 33 is executed. In this processing, whether the movement of the mesh point to the destination place selected in Step ST38 or ST 39 is permitted or not is judged or whether the deletion of the mesh point is permitted or not is judged. First, whether the movement is permitted or not is judged (Step ST401) (Fig. 11). If the movement is permitted, the routine proceeds to Step 402 and, if the deletion is permitted, the routine proceeds to Step ST403. In Step ST402, by using the evaluation function calculating processing program P6, a value of a sum (f1 + f2 + f3) of the evaluation functions f1, f2, and f3 before and after the movement is calculated and the amount of change $\Delta$ (f1 + f2 + f3) of the sum (f1 + f2 + f3) before and after the movement is calculated. Next, whether the amount of the change $\Delta$ (f1 + f2 + f3) is negative or not is judged (Step ST404) . If the amount of the change $\Delta$ (f1 + f2 + f3) is negative, the movement of the mesh point is permitted unconditionally (Step ST405). On the other hand, if the amount of the change $\Delta$ (f1 + f2 + f3) is not negative, the movement is permitted in a specified permission probability r2 given by the equation (7) (Step ST406).

In Step ST403, by using the evaluation function calculating processing program P6, a value of a sum (f1 + f2 + f3) of the evaluation functions f1, f2, and f3 before and after the deletion is calculated and, based on a result of the calculation of the value of the sum, the amount of the change $\Delta$ (f1 + f2 + f3) of the sum (f1 + f2 + f3) is calculated.

Next, whether the amount of the change $\Delta$ (f1 + f2 + f3) of the sum (f1 + f2 + f3) is a negative value or not is judged (Step ST407). If the amount of the change $\Delta$ (f1 + f2 + f3) is negative, the deletion of the mesh points is deleted unconditionally (Step ST408) . If the amount of the change $\Delta$ (f1 + f2 + f3) is not negative, the movement is permitted in a specified probability r3 given by an equation (10) (Step ST409).

$$r3 = \exp(-\Delta f3/t) \tag{10}$$

Next, a direction in which any one of the evaluation functions f1, f2, and f3 having a largest amount of the change expressed by any one of the $\Delta$f1, $\Delta$f2, and $\Delta$f3 is minimized is obtained and the obtained direction is stored as the movement direction which is used next time when the mesh points are moved by a method in which the mesh points are moved in the direction in which the evaluation function f1 or f2 is locally minimized (Step ST410).

Next, whether the change (by the movement or deletion) of the mesh points is permitted or not is judged (Step ST41). If the change is permitted, the routine proceeds to Step ST42. If the change is not permitted, the routine proceeds to Step ST43.

In Step ST42, a mesh point changing processing program P34 is performed. In this processing, the movement or deletion of the mesh points to the selected destination place is carried out.

In Step ST43 (trial number setting processing program P5), whether the number of trials for re-placement of the mesh points reaches the designated number of trials that has been set is judged. If the number of trials has reached the designated number of trials, the routine proceeds to Step ST44. If the number of trials has not reached the designated number of trials, the routine returns to Step ST34 and then a series of processing of re-placing the mesh points is repeated.

In Step ST44, the annealing method termination judging processing program P15 is executed. In this processing, when a rate of decrease [$\Delta$ (f1 + f2) / (f1 + f2) ] of (f1 + f2) obtained by calculating the sum of the evaluation functions over all mesh points reaches a specified lower limit, that is, 1%, the movement (re-placement) of the mesh points is terminated.

Next, in Step ST45, if the movement is judged to be terminated, the routine proceeds to Step ST46. In cases other than above, the routine returns to Step ST33. In Step ST33, after the number of times of designated trials is renewed and the judgement condition value t is changed, the mesh point is again moved.

As shown in Fig. 14, the mesh point is moved or deleted so that the mesh points each having the same impurity concentration do not exist within a minimum distance between the mesh points each having a different impurity concentration and thus the re-placement of the well-posed mesh points is completed.

In Step ST46, a mesh generating processing program P16 is executed. In this processing, each of mesh points is connected and a triangular mesh is generated. Finally, in Step ST47, an impurity concentration interpolating processing program P17 is executed. In this processing, the impurity concentration is interpolated and a new mesh is produced.

Thus, by configuring as above, substantially the same effects as in the second embodiment can be obtained. Additionally, in Step ST36, as the mesh point changing method, the method of deleting the mesh points in a specified deletion selecting probability is selected. If, in Step ST40, the mesh points are judged to be able to be deleted, in Step ST42, the mesh points are deleted and, therefore, it is possible to re-place the mesh points so that specified calculation accuracy is ensured and is possible to minimize the number of mesh points and to generate the well-posed mesh which enables high-speed calculation.

### Fourth Embodiment

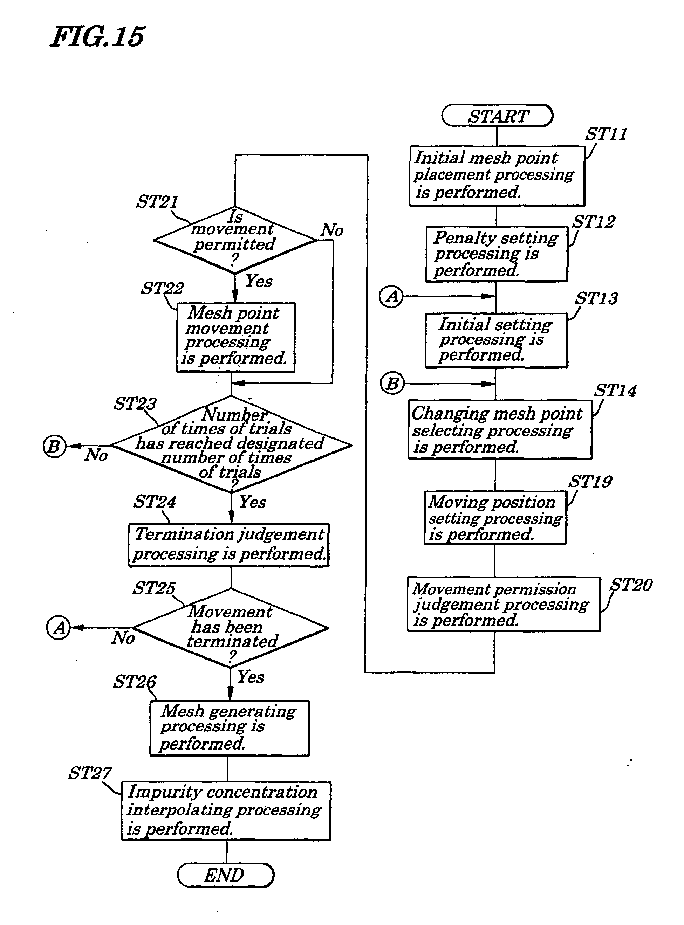

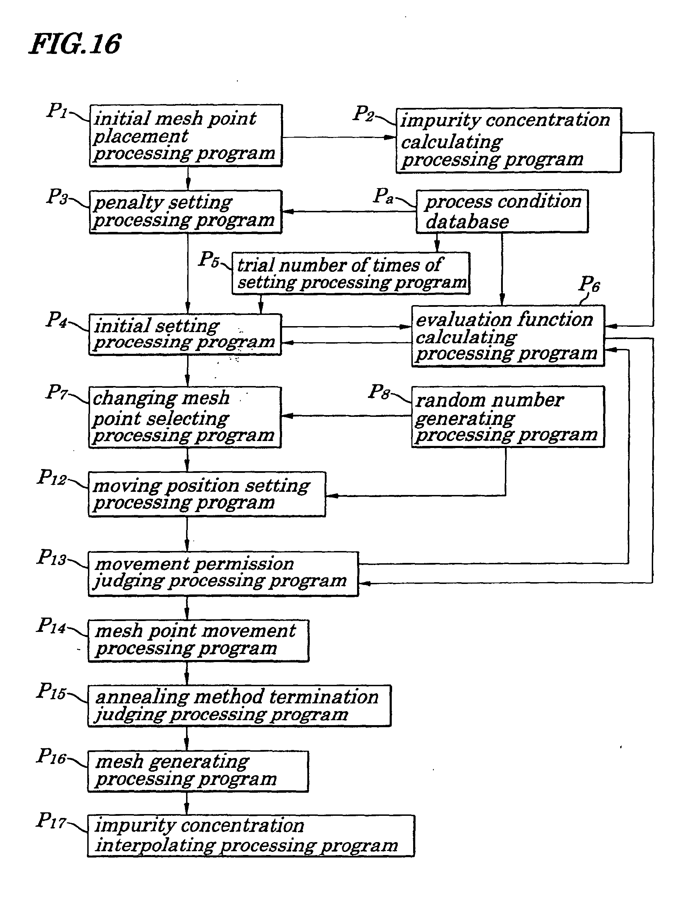

Figure 15 is a flowchart explaining a method for generating well-posed meshes according to a fourth embodiment of the present invention. Figure 16 is a block diagram showing configurations of a well-posed mesh generating processing program according to the fourth embodiment.

The method of the fourth embodiment differs from that of the first embodiment in that, to move mesh points, movement of the mesh points is limited to the movement using random numbers and the number of times of trials is made the same as the number of mesh points. As a result, as shown in Fig. 16, out of sub-programs making up the well-posed mesh generating processing program, a random number modulation processing program P9, mesh point movement method selection processing program P10 and moving direction setting processing program P11 are omitted.

In the well-posed mesh generating method of this embodiment, as shown in Fig. 15, a routine, after the mesh points to be moved are selected based on random numbers generated by a random number generating processing program P8 in Step ST14, proceeds to Step ST19, without carrying out processing contained in Step ST15 to ST18 which has been performed in the first embodiment, and selects coordinates of a destination place in which the mesh point is to be moved by random numbers. Configurations other than above are substantially the same as those in the first embodiment.

Thus, according to the fourth embodiment, probability in which the mesh points are moved in. a comparatively wide range becomes high and the number of the re-placement decreases, thereby generating the well-posed mesh with higher speed.

### Fifth Embodiment

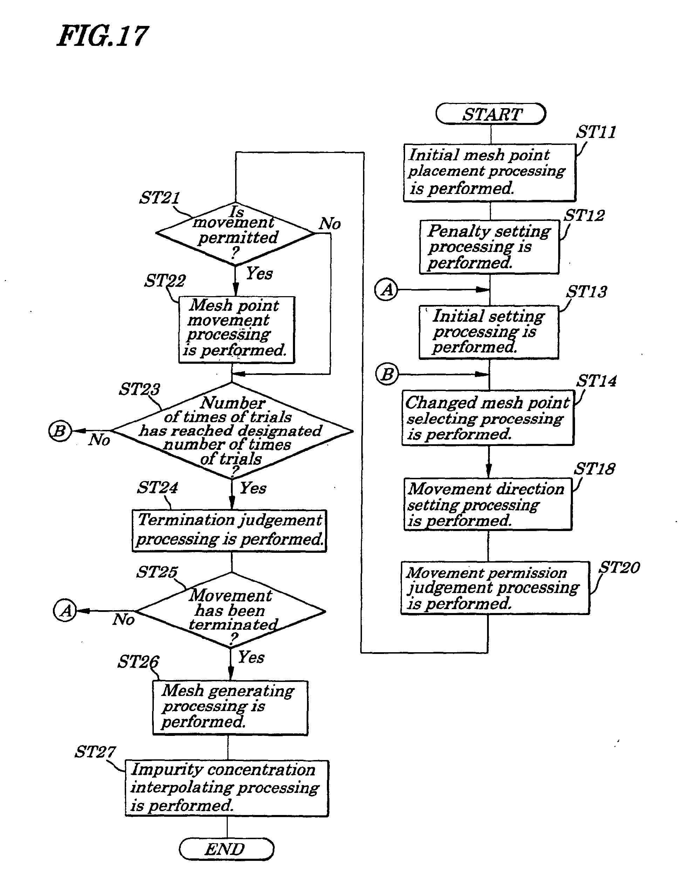

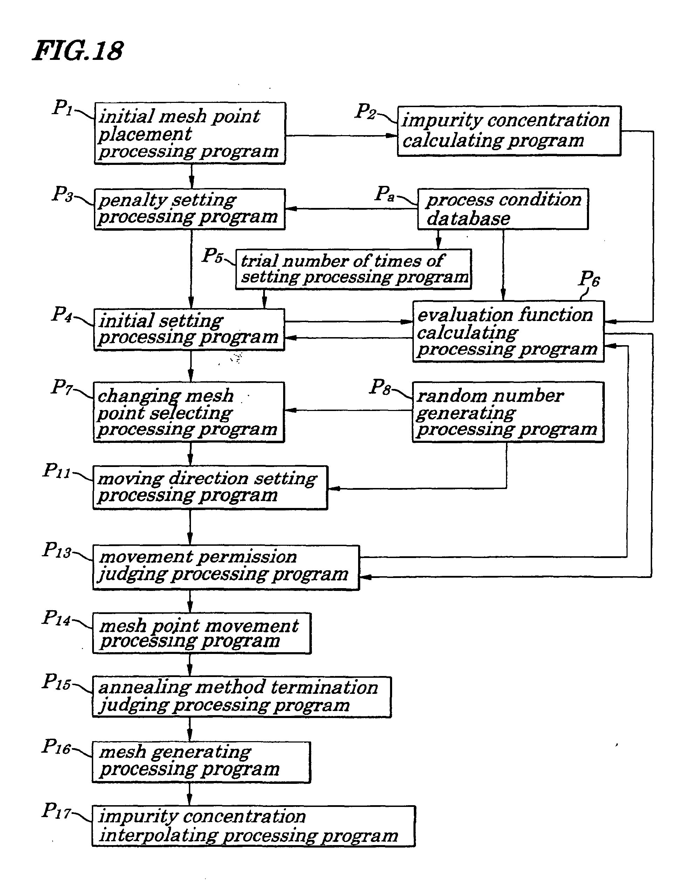

Figure 17 is a flowchart explaining a method for generating well-posed meshes according to a fifth embodiment of the present invention. Figure 18 is a block diagram showing configurations of a well-posed mesh generating processing program according to the fifth embodiment.

The method of the fifth embodiment differs from that in the second embodiment in that a moving method of mesh points is limited to the moving method in which the mesh point is moved in a direction in which an evaluation function f1 or f2 is locally decreased and the number of times of a designated trial is substantially the same as that of the mesh point. As a result, as shown in Fig. 18, out of sub-programs making up the well-posed mesh generating processing program, a random number modulation processing program P9, mesh point movement method selection processing program P10, and moving direction setting processing program P12 are omitted.

In the well-posed mesh generating method of this embodiment, as shown in Fig. 17, a routine, after the mesh points to be moved are selected based on random numbers generated by the random number generating processing program P8 in Step ST14, proceeds to Step ST18, without carrying out processing contained in Step ST15 to ST17 and Step ST19 which has been performed in the second embodiment, and moves the mesh points in the direction in which the evaluation function f1 or f2 is locally minimized. At this point, movement distance is determined in a local region and is set by generated random numbers. Since configurations other than above are substantially the same as those in the second embodiment, descriptions of them are omitted.

Thus, according to the fifth embodiment, if a change in impurity concentration is comparatively small and if placement of the mesh point does not require a big change from a state of its initial mesh point placement, it is possible to generate the well-posed mesh with higher speed and high accuracy.

It is apparent that the present invention is not limited to the above embodiments but may be changed and modified without departing from the scope and spirit of the invention. For example, in the above embodiments, the present invention is applied to process simulation, however, it may be applied to device simulation. Moreover, when the initial mesh point is placed, the initial mesh point may be generated, without using the placement of the mesh point which has been obtained last time and has been stored in advance, originally and from its beginning stage. Also, when the mesh point to be moved or deleted is selected, in the above embodiments, the mesh point is selected one by one, however, a plurality of mesh points to be moved or deleted may be selected and may be processed together. As a storage device, in addition to a hard disk storage device 14, for example, a magneto-optic storage device may be employed and it may be used singly or plurally. Also, in the above embodiment, in order to incorporate conditions by which the mesh point existing immediately below a gate is not allowed to be moved, the evaluation function f1 containing a penalty value Q is minimized in principle, however, a plurality of conditions may be incorporated.

The present invention may be applied not only to two dimensional simulation but also to three dimensional simulation. In this case, minimum information required as information about an initial mesh are only coordinates of a demarcation line in a region in which unmovable mesh points are placed in the first embodiment in which an evaluation function F1 is used as the evaluation function and, in the second embodiment in which evaluation functions F1 (f1) and F2 (f2) as the evaluation function and in the third embodiment in which the evaluation functions F1 (f1), F2 (f2), and F3 (f3) as the evaluation function, are only coordinates of the above demarcation line, of each of the mesh points and of impurity concentrations of each of impurity substances at each mesh point. This enables the storage region to be more greatly reduced compared with the conventional case in which information about a branch and face of the mesh is required.

Since setting of regions in which movement or invasion of the mesh points is made easy, while mesh conditions in the region in which mesh generation in vicinity of the demarcation line is difficult are still being maintained, the placement of the mesh points can be optimized, thus enabling application of the present invention to three dimensional simulation. Furthermore, in the second embodiment, permission of movement of the mesh point is judged based on amount of change in a sum of the evaluation functions f1 and f2, amounts of changes in functions obtained by performing other calculating operations on a product of both evaluation functions or on both evaluation functions may be used.

**Claims**

1. A mesh generating method for use in a semiconductor process simulation or a semiconductor device simulation and for achieving an optimum placement of a mesh, **characterized by** comprising:

   a mesh point initial placement step of placing initially mesh points (M);
   an evaluation function calculating step of calculating a value, corresponding to a placement pattern, of a specified evaluation function taking on a specified value corresponding to a placement pattern of said mesh points (M) and being used as an index for implementing an optimum placement of said mesh points (M);
   a random number generating step of generating a random number;
   a re-placement evaluation function calculating step of calculating a value of said evaluation function to be obtained when each of specified mesh points (M) is moved to a position corresponding to said random number generated in said random number generating step;
   a well-posed placement possibility judging step of judging a well-posed placement possibility in movement of said specified mesh points (M) based on values of said evaluation function calculated in said evaluation function calculating step and on values of said evaluation function calculated in said re-placement evaluation function calculating step ; and
   a mesh point re-placement step of performing re-placement of said mesh points (M) by moving said specified mesh points (M) when said well-posed placement possibility is judged to exist in said well-posed placement possibility judging step.

2. A mesh generating method for use in a semiconductor process simulation or a semiconductor device simulation and for achieving an optimum placement of a mesh, **characterized by** comprising:

   a mesh point initial placement step of placing initially mesh points (M);
   an evaluation function calculating step of calculating a value, corresponding to a placement pattern, of a specified evaluation function taking on a specified value corresponding to a placement pattern of said mesh points (M) and being used as an index for implementing an optimum placement of said mesh points (M);

a re-placement evaluation function calculating step of calculating a value of said evaluation function obtained when each of specified mesh points (M) is moved to a specified position in direction in which said evaluation function becomes an extreme value corresponding to re-placement which brings said mesh points (M) nearly to a state in which an optimum placement is achieved;

a well-posed placement possibility judging step of judging a well-posed placement possibility in movement in said specified mesh points (M) based on values of said evaluation function calculated in said evaluation function calculating step and on values of said evaluation function calculated in said re-placement evaluation function calculating step ; and

a mesh point re-placement step of performing re-placement of said mesh points (M) by moving said specified mesh points (M) when said well-posed placement possibility is judged to exist in said well-posed placement possibility judging step.

3. A mesh generating method for use in a semiconductor process simulation or a semiconductor device simulation and for achieving an optimum placement of a mesh, **characterized by** comprising:

a mesh point initial placement step of placing initially mesh points (M);

an evaluation function calculating step of calculating a value, corresponding to a placement pattern, of a specified evaluation function taking on a specified value corresponding to a placement pattern of said mesh points (M) and being used as an index for implementing an optimum placement of said mesh points (M) ;

a re-placement evaluation function calculating step of calculating a value of said evaluation function to be obtained when each of specified mesh points (M) is deleted; and

a well-posed placement possibility judging step of judging a well-posed placement possibility in deletion of said specified mesh points (M) based on values of said evaluation function calculated in said evaluation function calculating step and on values of said evaluation function calculated in said re-placement evaluation function calculating step ; and

a mesh point re-placement step of performing re-placement of said mesh points (M) by deleting said specified mesh points (M) when said well-posed placement possibility is judged to exist in said well-posed placement possibility judging step.

4. A mesh generating method for use in a semiconductor process simulation or a semiconductor device simulation and for achieving an optimum placement of a mesh, **characterized by** comprising:

a mesh point initial placement step of placing initially mesh points (M);

an evaluation function calculating step of calculating a value, corresponding to a placement pattern, of first and second evaluation functions taking on a specified value corresponding to a placement pattern of said mesh points (M) and being used as an index for implementing an optimum placement of said mesh points (M);

a first random generating step to generate a first random number;

a second random generating step to generate a second random number;

a first re-placement evaluation function calculating step of calculating a value of said first evaluation function obtained when each of specified mesh points (M) is moved in a first probability based on said first random number to a position corresponding to said second random number generated in said second random number generating step;

a second re-placement evaluation function calculating step of calculating a value of said second evaluation function obtained when each of said specified mesh points (M) is moved in a second probability based on said first random number to a specified position in a direction in which said second evaluation function becomes an extreme value corresponding to re-placement which brings said mesh points (M) nearly to a state in which an optimum placement is achieved;

a well-posed placement possibility judging step of judging a well-posed placement possibility in movement of said specified mesh points (M) based on a value of said first or second evaluation function calculated in said evaluation function calculating step and on a value of said first or second evaluation function calculated in said first or second re-placement evaluation function calculating step ; and

a mesh point re-placement step of performing re-placement of said mesh points (M) by moving said specified mesh points (M) when said well-posed placement possibility is judged to exist in said well-posed placement possibility judging step.

5. A mesh generating method for use in a semiconductor process simulation or a semiconductor device simulation and for achieving an optimum placement of a mesh, **characterized by** comprising:

a mesh point initial placement step of placing initially mesh points (M);

an evaluation function calculating step of calculating, values, corresponding to placement patterns, of said first, said second and a third evaluation function each taking on a specified value corresponding to each of placement patterns of said mesh points (M) and each being used as an index for implementing an optimum placement of said mesh points (M) ;

a first random generating step to generate a first random number;

a second random generating step to generate a second random number;

a first re-placement evaluation function calculating step of calculating a value of said first evaluation function obtained when each of first specified mesh points (M) is moved in a first probability based on said first random number to a position corresponding to a second random number generated in said second random number generating step;

a second re-placement evaluation function calculating step of calculating a value of said second evaluation function obtained when each of second specified mesh points (M) is moved in a second probability based on said first random number to a specified position in a direction in which said second evaluation function becomes an extreme value corresponding to re-placement which brings said mesh points (M) nearly to a state in which an optimum placement is achieved;

a third re-placement evaluation function calculating step of calculating a value of said third evaluation function to be obtained when each of third specified mesh points (M) is deleted in a third probability based on said first random number;

a well-posed placement possibility judging step of judging said well-posed placement possibility in movement of said first or second specified mesh points (M) based on a value of said first or second evaluation function calculated in said evaluation function calculating step and based on a value of said first or second evaluation function calculated in said first or second re-placement evaluation function calculating step , when said first or second re-placement evaluation function calculating step is performed and of judging said well-posed placement possibility in deletion of said third specified mesh points (M) based on a value of said third evaluation function calculated in said evaluation function calculating step and based on a value of said third evaluation function calculated in said third re-placement evaluation function calculating step , when said third re-placement evaluation function calculating step is performed; and

a mesh point re-placement step of performing re-placement of said mesh points (M) by moving or deleting said first, second or third specified mesh points (M) when said well-posed placement possibility is judged to exist in said well-posed placement possibility judging step.

6. The mesh generating method according to Claim 4, wherein said first or second evaluation function is set in advance so that said value of said first or second evaluation function decreases as a placement pattern of said mesh points (M) turns out to be a state of an optimum placement and wherein, in said well-posed placement possibility judging step, said first or second evaluation function calculated in said re-placement evaluation calculating step becomes larger than said first or second evaluation function calculated in said evaluation function calculating step , movement of said specified mesh points (M) in a specified permission probability is judged to be possible and wherein said permission probability is set so that said permission probability decreases with increase in the number of times of re-placement of said mesh points (M).

7. The mesh generating method according to Claim 6, wherein said first probability is so set that it decreases with increase in the number of times of re-placement of said mesh points (M).

8. The mesh generating method according to any one of Claims 4,6 and 7 wherein said mesh generating method is employed for use in a simulation of manufacturing processes for semiconductors.

9. The mesh generating method to any one of Claims 4, 6, 7 and 8 wherein, in said second re-placement evaluation function calculating step , a direction in which said first evaluation function or said second evaluation function becomes an extreme value corresponding to re-placement which brings said mesh points (M) nearly to a state in which an optimum placement is achieved, is used as a direction in which same mesh point is moved next time in said second re-placement evaluation function calculating step .

10. The mesh generating method to any one of Claims 4, 6, 7, 8 and 9 wherein, in said first and second re-placement evaluation function calculating step , values of said first and second evaluation functions are calculated in a vicinity of said specified mesh points (M).

**11.** A storage medium storing a mesh generating program to have a computer execute a mesh generating method for use in a semiconductor process simulation or a semiconductor device simulation and for achieving an optimum placement of a mesh, said mesh generating method **characterized by** comprising:

a mesh point initial placement step of placing initially mesh points (M);
an evaluation function calculating step of calculating a value, corresponding to a placement pattern, of a specified evaluation function taking on a specified value corresponding to a placement pattern of said mesh points (M) and being used as an index for implementing an optimum placement of said mesh points (M);
a random number generating step of generating random numbers;
a re-placement evaluation function calculating step of calculating a value of said evaluation function to be obtained when each of specified mesh points (M) is moved to a position corresponding to said random numbers generated in said random number generating step;
a well-posed placement possibility judging step of judging a well-posed placement possibility in movement of said specified mesh points (M) based on a value of said evaluation function calculated in said evaluation function calculating step and on a value of said evaluation function calculated in said re-placement evaluation function calculating step ; and
a mesh point re-placement step of performing re-placement of said mesh points (M) by moving said specified mesh points (M) when said well-posed placement possibility is judged to exist in said well-posed placement possibility judging step.

**12.** A storage medium storing a mesh generating program to have a computer execute a mesh generating method for use in a semiconductor process simulation or a semiconductor device simulation and for achieving an optimum placement of a mesh, said mesh generating method **characterized by** comprising:

a mesh point initial placement step of placing initially mesh points (M);
an evaluation function calculating step of calculating a value, corresponding to a placement pattern, of a specified evaluation function taking on a specified value corresponding to a placement pattern of said mesh points (M) and being used as an index for implementing an optimum placement of said mesh points (M);
a re-placement evaluation function calculating step of calculating a value of said evaluation function obtained when each of specified mesh points (M) is moved to a specified position in a direction in which said evaluation function becomes an extreme value corresponding to re-placement which brings said mesh points (M) nearly to a state in which an optimum placement is achieved;
a well-posed placement possibility judging step of judging a well-posed placement possibility in movement in said specified mesh points (M) based on a value of said evaluation function calculated in said evaluation function calculating step and on a value of said evaluation function calculated in said re-placement evaluation function calculating step ; and
a mesh point re-placement step of performing re-placement of said mesh points (M) by moving said specified mesh points (M) when said well-posed placement possibility is judged to exist in said well-posed placement possibility judging step.

**13.** A storage medium storing a mesh generating program to have a computer execute a mesh generating method for use in a semiconductor process simulation or a semiconductor device simulation and for achieving an optimum placement of a mesh, said mesh generating method **characterized by** comprising:

a mesh point initial placement step of placing initially mesh points (M);
an evaluation function calculating step of calculating a value, corresponding to a placement pattern, of a specified evaluation function taking on a specified value corresponding to a placement pattern of said mesh points (M) and being used as an index for implementing an optimum placement of said mesh points (M);
a re-placement evaluation function calculating step of calculating a value of said evaluation function obtained by deleting specified mesh points (M); and
a well-posed placement possibility judging step of judging a well-posed placement possibility in deletion of said specified mesh points (M) based on a value of said evaluation function calculated in said evaluation function calculating step and on a value of said evaluation function calculated in said re-placement evaluation function calculating step ; and
a mesh point re-placement step of performing re-placement of said mesh points (M) by moving said specified mesh points (M) when said well-posed placement possibility is judged to exist in said well-posed placement possibility judging step.

**14.** A storage medium storing a mesh generating program to have a computer execute a mesh generating method for use in a semiconductor process simulation or a semiconductor device simulation and for achieving an optimum placement of a mesh, said mesh generating method **characterized by** comprising:

a mesh point initial placement step of placing initially mesh points (M);

an evaluation function calculating step of calculating a value, corresponding to a placement pattern, of first and second evaluation functions taking on a specified value corresponding to a placement pattern of said mesh points (M) and being used as an index for implementing an optimum placement of said mesh points (M);

a first random generating step to generate a first random number;

a second random generating step to generate a second random number;

a first re-placement evaluation function calculating step of calculating a value of said first evaluation function obtained when each of specified mesh points (M) is moved in a first probability based on said first random number to a position corresponding to said second random number generated in said second random number generating step;

a second re-placement evaluation function calculating step of calculating a value of said second evaluation function obtained when each of said specified mesh points (M) is moved in a second probability based on said first random number to a specified position in a direction in which said second evaluation function becomes an extreme value corresponding to re-placement which brings said mesh points (M) nearly to a state in which an optimum placement is achieved;

a well-posed placement possibility judging step of judging a well-posed placement possibility in movement of said specified mesh points (M) based on a value of said first or second evaluation function calculated in said evaluation function calculating step and on a value of said first or second evaluation function calculated in said first or second re-placement evaluation function calculating step ; and

a mesh point re-placement step of performing re-placement of said mesh points (M) by moving said specified mesh points (M) when said well-posed placement possibility is judged to exist in said well-posed placement possibility judging step.

**15.** A storage medium storing a mesh generating program to have a computer execute a mesh generating method for use in a semiconductor process simulation or a semiconductor device simulation and for achieving an optimum placement of a mesh, said mesh generating method **characterized by** comprising:

a mesh point initial placement step of placing initially mesh points (M);

an evaluation function calculating step of calculating, values, corresponding to placement patterns, of said first, said second and a third evaluation function each taking on a specified value corresponding to each of placement patterns of said mesh points (M) and each being used as an index for implementing an optimum placement of said mesh points (M);

a first random generating step to generate a first random number;

a second random generating step to generate a second random number;

a first re-placement evaluation function calculating step of calculating a value of said first evaluation function obtained when each of first specified mesh points (M) is moved in a first probability based on said first random number to a position corresponding to a second random number generated in said second random number generating step;

a second re-placement evaluation function calculating step of calculating a value of said second evaluation function obtained when each of second specified mesh points (M) is moved in a second probability based on said first random number to a specified position in a direction in which said second evaluation function becomes an extreme value corresponding to re-placement which brings said mesh points (M) nearly to a state in which an optimum placement is achieved;

a third re-placement evaluation function calculating step of calculating a value of said third evaluation function to be obtained when each of third specified mesh points (M) is deleted in a third probability based on said first random number;

a well-posed placement possibility judging step of judging said well-posed placement possibility in movement of said first or second specified mesh points (M) based on a value of said first or second evaluation function calculated in said evaluation function calculating step and based on a value of said first or second evaluation function calculated in said first or second re-placement evaluation function calculating step , when said first or second re-placement evaluation function calculating step is performed and of judging said well-posed placement possibility in deletion of said third specified mesh points (M) based on a value of said third evaluation function calculated in said evaluation function calculating step and based on a value of said third evaluation function calculated in said third re-placement evaluation function calculating step, when said third re-placement evaluation function calculating step is performed; and

a mesh point re-placement step of performing re-placement of said mesh points (M) by moving or deleting said first, second or third specified mesh points (M) when said well-posed placement possibility is judged to exist in said well-posed placement possibility judging step.

EP 1 150 255 A2

## FIG.1

```
                                          ┌─────────────┐
                                          │    START    │
                                          └──────┬──────┘
                                                 │          ST11
                                          ┌──────────────────┐
                                          │ Initial mesh point │
                                          │ placement processing│
                                          │ is performed.      │
                                          └──────────┬─────────┘
                                                     │        ST12
                                          ┌────────────────┐
                                          │ Penalty setting │
                                          │ processing is   │
                                          │ performed.      │
              (A) ───────────────────────►└────────┬───────┘
                                                    │         ST13
                                          ┌────────────────┐
                                          │ Initial setting │
                                          │ processing is   │
                                          │ performed.      │
              (B) ───────────────────────►└────────┬───────┘
                                                    │          ST14
                                          ┌──────────────────┐
                                          │ Changed mesh point │
                                          │ selecting processing│
                                          │ is performed.      │
                                          └──────────┬─────────┘
```

**ST21** — Movement is permitted ? — No

**ST22** — Yes — Mesh point movement processing is performed.

**ST23** — Number of times of trials has reached designated number of times of trials ? — No → (B)

**ST24** — Yes — Termination judgement processing is performed.

**ST25** — Movement has been performed ? — No → (A)

**ST26** — Yes — Mesh generating processing is performed.

**ST27** — Impurity concentration interpolating processing is performed.

END

**ST15** — Random number modulating processing is performed.

**ST16** — Mesh point moving method selecting processing is performed.

**ST17** — random numbers? — No → **ST18** Moving direction setting processing is performed. — Yes → **ST19** Moving position setting processing is performed.

**ST20** — Movement permission judging processing is performed.

24

EP 1 150 255 A2

## FIG.2

```
    ( Movement permission
      judgement processing. )
              |
ST201 ─── Amount of change
          is calculated.
              |
ST202 ─── < Is amount of        > ──No──┐
           change negative?             |
              |                         |
             Yes                   ST204 |
ST203 ─── Movement is        Movement is permitted
          permitted.         in permission probability r1.
              |                         |
              |<────────────────────────┘
ST205 ─── Direction of movement
          of mesh point is stored.
              |
          ( Return )
```

*FIG.3*

$P_1$ — initial mesh point placement processing program

$P_2$ — impurity concentration calculating program

$P_3$ — penalty setting processing program

$P_a$ — process condition database

$P_5$ — trial number of times of setting processing program

$P_4$ — initial setting processing program

$P_6$ — evaluation function calculating processing program

$P_7$ — changing mesh point selecting processing program

$P_8$ — random number generating processing program

$P_9$ — random number modulation processing program

$P_{10}$ — mesh point moving method selecting processing program

$P_{12}$ — moving position setting processing program

$P_{11}$ — moving direction setting processing program

$P_{13}$ — movement permission judging processing program

$P_{14}$ — mesh point movement processing program

$P_{15}$ — annealing method termination judging processing program

$P_{16}$ — mesh generating processing program

$P_{17}$ — impurity concentration interpolating processing program

## FIG.4

_1_ ;simulation device

| 12 | | 11 | | 15 |
|---|---|---|---|---|
| ROM | | | | input device |
| 13 | | C | | 16 |
| RAM | | P | | display device |
| 14 | | U | | 17 |
| hard disk storage device | | | | output device |

**FIG.5**

**FIG.6**

FIG.7

```
        ┌─────────────────────────┐
        │  Movement permission    │
        │  judging processing.    │
        └─────────────────────────┘
                    │
ST207  ┌─────────────────────────┐
       │ calculation of amount   │
       │ of change  Δ(f₁ +f₂)    │
       └─────────────────────────┘
                    │
ST208              ◇
            ┌───────────────┐        No
            │  Δ(f₁+f₂) < 0 ├──────────────┐
            └───────────────┘              │
                    │ Yes                  │
ST209  ┌──────────────────┐   ST210  ┌────────────────────────────┐
       │ Movement is      │          │ Movement is permitted      │
       │ permitted.       │          │ in permission probability r2.│
       └──────────────────┘          └────────────────────────────┘
                    │                       │
ST211  ┌──────────────────────┐◄────────────┘
       │ Direction in which   │
       │ mesh point are moved.│
       └──────────────────────┘
                    │
              ( Return )
```

$$\Delta(f_1 + f_2)$$

$$\Delta(f_1 + f_2) < 0$$

FIG.8

FIG.9

## FIG.10

```
                                          ( START )
                                              |
                                              ▼              ST31
                                     ┌──────────────────┐
                                     │ Initial mesh point│
                                     │ placement processing│
                                     │ is performed.    │
                                     └──────────────────┘
                                              |
                                              ▼              ST32
                                     ┌──────────────────┐
                                     │ Penalty setting  │
                                     │ processing is    │
                                     │ performed.       │
                                     └──────────────────┘
                                              |
                              (A)─────────────┤              ST33
                                              ▼
                                     ┌──────────────────┐
                                     │ Initial setting  │
                                     │ processing is    │
                                     │ performed.       │
                                     └──────────────────┘
                                              |
                              (B)─────────────┤              ST34
                                              ▼
                                     ┌──────────────────┐
       ST41                          │ Changing mesh point│
      ◇ Is                           │ selecting processing│
   change        No                  │ is performed.    │
   permitted ────────┐               └──────────────────┘
      ?             │                         |
      │ Yes         │                         ▼              ST35
      ▼             │                ┌──────────────────┐
 ST42               │                │ Random number    │
┌──────────┐        │                │ modulation processing│
│Mesh point│        │                │ is performed.    │
│changing  │        │                └──────────────────┘
│processing│        │                         |
│is performed.│     │                         ▼              ST36
└──────────┘        │                ┌──────────────────┐
      │             │                │ Mesh point changing│
      ▼◄────────────┘                │ method selecting │
 ST43                                │ processing is performed.│
   ◇ Has                             └──────────────────┘
   number                      ST51           |
 of times of trials             ◇ Is          ▼
(B)◄─ reached designated        movement      No
  No  number of times          selected ──────────────┐
      of trials                   ?                    │
      ?                            │ Yes    ST52        ▼
      │ Yes                        ▼        ┌──────────────┐
 ST44                          ST37         │ Deletion     │
┌──────────────────┐            ◇ Is        │ processing   │
│Termination judgement│        destination  │ is performed.│
│processing is performed.│     place selected by  Yes └──────────────┘
└──────────────────┘          random number ─────────┐
      │                            ?                   │
      ▼                       ST38  │ No      ST39      │
 ST45                              ▼                    ▼
  ◇ Movement               ┌──────────────┐  ┌──────────────┐
(A)◄─ has been             │Moving direction│ │Moving position│
  No  terminated           │setting processing│ │setting processing│
      ?                     │is performed.  │  │is performed.  │
      │ Yes                 └──────────────┘  └──────────────┘
      ▼                            │                 │
 ST46                              ▼◄────────────────┘
┌──────────┐                       ▼
│Mesh generating│            ST40
│processing is  │           ┌──────────────────┐
│performed.     │           │ Change permission │
└──────────┘                │ judgement processing│
      │                     │ is performed.    │
      ▼                     └──────────────────┘
 ST47                                │
┌──────────────────┐                 │
│Impurity concentration│             │
│interpolating processing│           │
│is performed.      │                │
└──────────────────┘                 │
      │                              │
      ▼                              │
  ( END )                            │
```

31

## FIG.11

```
        ┌─────────────────────┐
        │  change permission  │
        │ judgement processing│
        └─────────────────────┘
                   │
 ST401             ▼
         ╱────────────────────╲          No
        ╱    Is movement        ╲──────────────────────────┐
        ╲    permitted?         ╱                          │
         ╲────────────────────╱                            │
 ST402             │ Yes                   ST403            │
        ┌─────────────────────┐            ┌─────────────────────┐
        │ Amount of change     │           │ Amount of change     │
        │ Δ(f1+f2+f3) is       │           │ Δ(f1+f2+f3) is       │
        │ calulated.           │           │ calulated.           │
        └─────────────────────┘            └─────────────────────┘
 ST404             │                   ST407             │
         ╱──────────────────╲    No        ╱──────────────────╲    No
        ╱  Δ(f1+f2+f3) < 0   ╲──────┐      ╱  Δ(f1+f2+f3) < 0   ╲──────┐
        ╲                    ╱      │      ╲                    ╱      │
         ╲──────────────────╱       │       ╲──────────────────╱       │
 ST405        │ Yes    ST406 │  ST408      │ Yes   ST409         │
        ┌──────────┐  ┌──────────────┐  ┌──────────┐  ┌──────────────┐
        │Movement  │  │Movement is    │  │Deletion  │  │Deletion is    │
        │is        │  │permitted in   │  │is        │  │permitted in   │
        │permitted.│  │permission     │  │permitted.│  │permission     │
        └──────────┘  │probability r2.│  └──────────┘  │probability r3.│
                      └──────────────┘                  └──────────────┘
```

$\Delta(f_1+f_2+f_3)$

ST410

Direction of movement
of mesh point is stored.

return

## FIG.12

$P_1$ — initial mesh point placement processing program

$P_2$ — impurity concentration calculating processing program

$P_3$ — penalty setting processing program

$P_a$ — process condition database

$P_5$ — trial number of times of setting processing program

$P_4$ — initial setting processing program

$P_6$ — evaluation function calculating processing program

$P_7$ — changing mesh point selecting processing program

$P_8$ — random number generating processing program

$P_9$ — random number modulation processing program

$P_{30}$ — mesh point changing method selection processing program

$P_{12}$ — moving position setting processing program

$P_{31}$ — deletion processing program

$P_{11}$ — moving direction setting processing program

$P_{33}$ — movement permission judging processing program

$P_{34}$ — mesh point changing processing program

$P_{15}$ — annealing method termination judging processing program

$P_{16}$ — mesh generating processing program

$P_{17}$ — impurity concentration interpolating processing program

33

## FIG.13

$R_{21}$
$R_{22}$
$R_{23}$
$R_{24}$
$R_{25}$
$R_{26}$
$R_{27}$
$R_{28}$
$R_{29}$

22   23

unmovable initial
mesh points

movable initial
mesh points

2

21

M

## FIG.14

$R_{21}$
$R_{22}$
$R_{23}$
$R_{24}$
$R_{25}$
$R_{26}$
$R_{27}$
$R_{28}$
$R_{29}$

22   23

unmovable initial
mesh points

2

21

M

## FIG.15

START

Initial mesh point placement processing is performed. — ST11

Penalty setting processing is performed. — ST12

(A) →

Initial setting processing is performed. — ST13

(B) →

Changing mesh point selecting processing is performed. — ST14

Moving position setting processing is performed. — ST19

Movement permission judgement processing is performed. — ST20

ST21 — Is movement permitted ? — No

Yes

ST22 — Mesh point movement processing is performed.

ST23 — Number of times of trials has reached designated number of times of trials ? — (B) No

Yes

ST24 — Termination judgement processing is performed.

ST25 — Movement has been terminated ? — (A) No

Yes

ST26 — Mesh generating processing is performed.

ST27 — Impurity concentration interpolating processing is performed.

END

## FIG.16

$P_1$ — initial mesh point placement processing program

$P_2$ — impurity concentration calculating processing program

$P_3$ — penalty setting processing program

$P_a$ — process condition database

$P_5$ — trial number of times of setting processing program

$P_4$ — initial setting processing program

$P_6$ — evaluation function calculating processing program

$P_7$ — changing mesh point selecting processing program

$P_8$ — random number generating processing program

$P_{12}$ — moving position setting processing program

$P_{13}$ — movement permission judging processing program

$P_{14}$ — mesh point movement processing program

$P_{15}$ — annealing method termination judging processing program

$P_{16}$ — mesh generating processing program

$P_{17}$ — impurity concentration interpolating processing program

# FIG.17

START

ST11
Initial mesh point placement processing is performed.

ST12
Penalty setting processing is performed.

(A) →

ST13
Initial setting processing is performed.

(B) →

ST14
Changed mesh point selecting processing is performed.

ST18
Movement direction setting processing is performed.

ST20
Movement permission judgement processing is performed.

ST21
Is movement permitted ? — No

Yes

ST22
Mesh point movement processing is performed.

ST23
Number of times of trials has reached designated number of times of trials ?

(B) ← No

Yes

ST24
Termination judgement processing is performed.

ST25
Movement has been terminated ?

(A) ← No

Yes

ST26
Mesh generating processing is performed.

ST27
Impurity concentration interpolating processing is performed.

END

## FIG.18

$P_1$ — initial mesh point placement processing program → $P_2$ — impurity concentration calculating program

$P_3$ — penalty setting processing program ← $P_a$ — process condition database

$P_5$ — trial number of times of setting processing program

$P_4$ — initial setting processing program ← $P_6$ — evaluation function calculating processing program

$P_7$ — changing mesh point selecting processing program ← $P_8$ — random number generating processing program

$P_{11}$ — moving direction setting processing program

$P_{13}$ — movement permission judging processing program

$P_{14}$ — mesh point movement processing program

$P_{15}$ — annealing method termination judging processing program

$P_{16}$ — mesh generating processing program

$P_{17}$ — impurity concentration interpolating processing program

## FIG.19

```
        ┌─────────────────┐
        │     START       │
        └─────────────────┘
                 │
                 ▼          ST101
        ┌─────────────────────────┐
        │ Initial triangular mesh │
        │ is generated.           │
        └─────────────────────────┘
                 │
                 ▼          ST102
  ┌────────────────────────────────────────────────┐
  │ Coefficient k which can correspond to change    │
  │ rate of local impurity concentration at         │
  │ the place is provided to each of mesh branches. │
  └────────────────────────────────────────────────┘
                 │
                 ▼          ST103
  ┌────────────────────────────────────────────────┐
  │ By regarding each of mesh branches as spring    │
  │ having coefficient k as spring constant, position│
  │ of each of mesh points is changed so that static│
  │ balancing conditions are met.                   │
  └────────────────────────────────────────────────┘
                 │
                 ▼
        ┌─────────────────┐
        │      END        │
        └─────────────────┘
```